# EUROPÄISCHE PATENTSCHRIFT

(11) **EP 1 769 484 B1**
(45) Veröffentlichungstag und Bekanntmachung des Hinweises auf die Patenterteilung: **27.02.2019**
(21) Anmeldenummer: 05754354.8
(22) Anmeldetag: 06.07.2005
(51) Int. Cl.: G02B 5/30, B42D 25/29

(54) **SICHERHEITSMERKMAL UND VERFAHREN ZU DESSEN HERSTELLUNG**
SECURITY FEATURE AND METHOD FOR PRODUCING THE SAME
CARACTERISTIQUE DE SECURITE ET PROCEDE DE PRODUCTION DE CETTE CARACTERISTIQUE

(30) Priorität: 21.07.2004 CH 123104
(43) Veröffentlichungstag der Anmeldung: 04.04.2007
(73) Patentinhaber: Landqart AG, 7302 Landquart (CH)
(72) Erfinder: KOCHER, Christoph, CH-8057 Zürich (CH)
(74) Vertreter: Bremi, Tobias Hans
(86) Internationale Anmeldenummer: PCT/CH2005/000380
(87) Internationale Veröffentlichungsnummer: WO 2006/007745

(56) Entgegenhaltungen:
- EP-A- 1 233 106
- WO-A-01/07525
- WO-A-03/044276
- WO-A-03/053708
- US-A- 565 708
- US-A- 3 276 316
- US-A- 5 739 296
- US-B1- 6 760 157
- WEDER C ET AL: "HIGHLY POLARIZED LUMINESCENCE FROM ORIENTED CONJUGATED POLYMER/POLYETHYLENE BLEND FILMS" ADVANCED MATERIALS, VCH VERLAGSGESELLSCHAFT, WEINHEIM, DE, Bd. 9, Nr. 13, 3. November 1997 (1997-11-03), Seiten 1035-1039, XP000721512 ISSN: 0935-9648

## Beschreibung

### TECHNISCHES GEBIET

Die vorliegende Erfindung betrifft ein optisches Element mit linear polarisierter Emission und/oder linear polarisierter Absorption sowie Verfahren zur Herstellung von derartigen optischen Elementen und Verwendungen von solchen optischen Elementen insbesondere im Sicherheitsbereich.

### STAND DER TECHNIK

Lichtpolarisierende Systeme wurden bereits mehrfach als Sicherheitsmerkmale für Wertdokumente, Identifikationspapiere und Ähnliches vorgeschlagen. Der sicherheitsrelevante Aspekt solcher Systeme liegt darin, dass sich die zur Authentifizierung herangezogenen lichtpolarisierenden Eigenschaften aus einer anisotropen Struktur ergeben, welche sich mit gängigen Druck- und Reproduktionsmethoden nicht imitieren lässt.

So beschreibt beispielsweise die US 5,004,327 ein lichtpolarisierendes Element für Sicherheitsdokumente. Der geschützte Gegenstand besteht aus einem uniaxial verstreckten Polymerfilm mit eingelagerten Iodpartikeln und zeichnet sich aus durch eine polarisierte Absorption im sichtbaren Bereich des elektromagnetischen Spektrums.

Ähnliche Systeme, bei denen die polarisierte Absorption durch Einfärben des Polymerfilms mit so genannten dichroischen Farbstoffen zustande kommt, sind beispielsweise genannt in der US 3,391,479. Anstelle der polarisierten Absorption im sichtbaren Bereich kann auch die polarisierte Emission oder Absorption von photolumineszenten Spezies, welche z.B. mit UV-Licht angeregt wird, zur Authentifizierung genutzt werden, wie beispielsweise in der WO00/19016 beschrieben.

Sicherheitsmerkmale, die sich durch polarisierte Absorptions- und/oder Emissionseigenschaften bei gleichzeitiger Fotolumineszenz auszeichnen, wie sie in der genannten WO0019016 beschreiben werden, werden bereits kommerzialisiert. Bekannt sind z.B. Sicherheitsfäden, welche in einen Träger integriert oder auf einen Träger appliziert werden können, und Melierfasern, welche in zufälliger Verteilung und Orientierung in einem Sicherheitspapier vorliegen.

Die Herstellung von Artikeln mit lichtpolarisierenden Eigenschaften geschieht im Allgemeinen analog zur Herstellung von optischen Lichtpolarisatoren. Solche bestehen üblicherweise aus anisotropen Polymersubstraten, die dichroische farbgebende Spezies enthalten. Dabei kann es sich beispielsweise um dichroische Farbstoffe handeln, die in molekular gelöster Form mit einer gewissen Vorzugsorientierung im Polymer vorliegen. Ebenso sind kolloidale Agglomerate bekannt, die in Art von Ketten mit Vorzugsorientierung in der Matrix vorliegen. Beispiele dafür sind Kolloide von Iod (oft 'Polyiod' genannt) und Agglomerate von Metallen, insbesondere Silber, Gold, Eisen oder Tellur.

Eine gängige Herstellmethode von optischen Polarisatoren ist die Verstreckung von gefärbten Polymerfilmen. Dabei werden die farbgebenden Spezies durch den Verstreckungsschritt zusammen mit dem Substrat uniaxial ausgerichtet. Alternativ sind im Stand der Technik Möglichkeiten bekannt, ein anisotropes Substrat, beispielsweise einen vorgängig verstreckten Polymerfilm, mit dichroischen farbgebenden Spezies zu färben, welche sich ebenfalls in orientierter Art und Weise im anisotropen Substrat oder auf dessen Oberfläche einlagern.

Eine weitere Art, optische Lichtpolarisatoren zu erhalten, ist aus der US 2,158,130 bekannt. Dort werden Lichtpolarisatoren beschrieben, die durch Verstrecken von Polymerfolien hergestellt werden, welche nadelförmige Kristalle enthalten, die in verschiedenen kristallographischen Achsen verschiedene Brechungsindizes besitzen. Durch die Verstreckung werden die Kristalle uniaxial ausgerichtet, wodurch sich eine Folie mit richtungsabhängigen Lichtstreueigenschaften ergibt. Ebenfalls bekannt sind analoge Systeme, bei denen sich die Absorptionseigenschaften der Kristalle in den verschiedenen Kristallrichtungen unterscheiden. Ein Beispiel sind Kristallite aus dem natürlich vorkommenden Mineral Turmalin.

Weitere Methoden zur Ausrichtung dichroischer Spezies sind im Stand der Technik bekannt. Einen guten Überblick über solche Orientierungsmethoden gibt beispielsweise M. Grell, D. D. C Bradley, Adv. Mater. 11, 1999, 895-905. Dort wird unterschieden zwischen mechanischer Ausrichtung, Langmuir-Blodgett-Deposition, flüssigkristalliner Selbstorganisation und Ausrichtung auf spezifischen Substraten. Dabei handelt es sich um komplexe Verfahren von geringer technologischer Bedeutung.

Für flüssigkristalline Medien sind einfache Methoden zur Ausrichtung basierend auf Scherung seit langem bekannt. Es ist wohlbekannt, dass sich Flüssigkristalle durch Scherkräfte ausrichten lassen, wie beispielsweise beschrieben in H. G. de Genne, "The Physics of Liquid Crystals", Clarendon Press, Oxford, 1974, Part 5.2.1.

Handelt es sich bei einem solchen flüssigkristallinen Medium um flüssigkristalline Farbstoffe, können auf diese Art und Weise Schichten mit lichtpolarisierenden Eigenschaften erhalten werden. Solche Schichten können beispielsweise in Flüssigkristallzellen für Displays Anwendung finden, wie beispielsweise in der US 5,739,296 beschrieben.

Die genannte US 5,739,296 beschränkt sich auf wasserlösliche, flüssigkristalline Farbstoffe mit Sulfonsäuregruppen, die in Wasser eine stabile flüssigkristalline Phase ausbilden können. Die Ausbildung einer solchen lyotropen Phase ist stark abhängig von diversen Parametern wie beispielsweise der Konzentration der flüssigkristallinen Substanz, der Temperatur, dem pH der Mischung, dem Gehalt an weiteren Spezies wie beispielsweise Salzen, und vielen mehr. Wie die Schrift sehr richtig bemerkt, spielt die Kinetik der Trocknung eine entscheidende Rolle, da die durch Scherung erhaltene Ordnung durch eine rasche Trocknung fixiert werden muss, sich bei einer zu hohen Temperatur aber die flüssigkristalline Phase in eine isotrope Phase umwandelt und die Ordnung somit verloren geht. Ausserdem beschränkt sich die Anwendung auf absorbierende, lichtpolarisierende Schichten, welche einzig in Transmission zur Nutzung kommen.

Es lässt sich feststellen, dass im Stand der Technik Ansätze fehlen, mit denen es gelingt, mit Hilfe einfacher, beispielsweise in der grafischen Industrie üblicher Verfahren optisch anisotrope Schichten auf gängige Substrate, insbesondere Papier, aufzubringen. Ein solches Verfahren wäre beispielsweise das Streichverfahren.

Ein weiterer Nachteil optisch anisotroper Systeme liegt in der Schwierigkeit, diese Systeme zu strukturieren oder zumindest in räumlicher Form zu begrenzen. Möglichkeiten zur Strukturierung optisch anisotroper Systeme sind bekannt aus C. Kocher, Diss. ETH No. 15043, 2003. Auch diese Verfahren unterscheiden sich aber grundsätzlich von gängigen, in der grafischen Industrie üblichen Verfahren.

Nachteile von ähnlichen Systemen, wie sie im Stand der Technik bekannt sind, sind ausserdem beschränkte Polarisationscharakteristik und schlechte Lichtechtheit und Thermostabilität. Oft wird eine ausreichende Orientierung nur auf vororientierten oder strukturierten Oberflächen erzielt oder benötigt eine zusätzliche externe Triebkraft wie beispielsweise elektrische oder magnetische Felder. Im Stand der Technik ist kein System bekannt, das die Herstellung von Schichten mit anisotropen optischen Eigenschaften auf Substraten mit rauer Oberfläche, beispielsweise Papier, erlaubt.

WO03044276 beschreibt einen Sicherheitsartikel mit mindestens einem Sicherheitselement, das mindestens ein photolumineszierendes Segment umfasst, das durch eine linear polarisierte Photolumineszenz und/oder linear polarisierte Absorption gekennzeichnet ist. Eine besonders ausgeprägte und gut beobachtbare Wirkung beim Einbetten eines solchen Sicherheitselements in eine Papier- oder Papierstruktur kann offenbar erreicht werden, wenn die papier- oder papierartige Struktur aus 30 bis 99 Prozent in Trockengewichtsfasern und 70 bis 1 Prozent im Trockengewicht besteht Füller und optionale Zusatzstoffe, insgesamt zu 100 Prozent.

US 6760157 beschreibt in Stretch-Verfahren hergestellte optische Filme, in welchen in einer Polymer-Matrix Polymer-Partikel angeordnet sind, und bei der Dehnung die Polymer-Partikel zur Ausbildung von polarisieren den Eigenschaften in der Matrix uniaxial orientiert werden.

### DARSTELLUNG DER ERFINDUNG

Der Erfindung liegt demnach die Aufgabe zugrunde, ein Verfahren zur Herstellung eines verbesserten, einfach herstellbaren optischen Elementes, insbesondere bevorzugt zur Verwendung als Sicherheitselement, zur Verfügung zu stellen. Es geht dabei darum, ein Herstellverfahren für ein optisches Element mit linear polarisierter Emission und/oder linear polarisierter Absorption zu verbessern. Optisch anisotrope Schichten sollen dabei in strukturierter Form oder zumindest in weitgehend wählbarer flächiger Begrenzung ausgeformt werden können, was für eine Vielzahl von Anwendungen von Interesse ist.

Die Lösung dieser Aufgabe wird durch die Merkmale von Anspruch 1 erreicht, insbesondere dadurch, dass das optische Element in eine Matrix eingebettete Partikel aufweist, wobei die Partikel formanisotrop sind, und wobei die Partikel in der Matrix wenigstens bereichsweise derart uniaxial orientiert sind, dass makroskopisch erkennbare linear polarisierte Emission respektive linear polarisierte Absorption des optischen Elementes auftritt.

Der Kern der Erfindung besteht somit darin, eine vereinfachte Herstellung dadurch zu erreichen, keine makroskopische Orientierung einer das optische Element bildenden festen Schicht wie beispielsweise ein Strecken vornehmen zu müssen, um in der Schicht vorhandene optisch anisotrope Elemente zu orientieren, sondern vielmehr auszunützen, dass bevorzugt selbst bereits linear polarisierte Emission und/oder linear polarisierter Absorption zeigende Partikel bei geeigneter Verarbeitungen in einer Matrix orientiert werden. Unter geeigneter Verarbeitung ist entsprechend eine Verarbeitung zu verstehen, welche in der Lage ist, die Partikel in der Matrix zu orientieren. Dies geschieht beispielsweise unter Zuhilfenahme der bei der Verarbeitung auftretenden Scherkräfte. In Wechselwirkung mit der anisotropen Form der Partikel (beispielsweise stäbchenförmige Partikel) führen die Scherkräfte zu einer kollektiven Ausrichtung der Partikel, und somit zu einem makroskopischen Effekt auf Basis des Effekts der Partikel.

Basis der vorliegenden Erfindung ist somit gewissermassen die Erkenntnis, dass sich "stäbchenförmige" Partikel durch Scherung ausrichten lassen, und dies mit der Erkenntnis zu kombinieren, dass anisotrope Substrate durch Färbung anisotrope optische Eigenschaften aufweisen können. Diese Scherung tritt dabei bereits in einer Herstellung auf Basis einer Suspension (aufgeschlämmte Partikel in einer flüssigen Phase) auf, wobei der Begriff Suspension hier auch auf hochviskose Mischungen bezogen sein soll, bei welchen die Partikel in einer hochviskosen flüssigen Matrix suspendiert sind. Der Erfindung liegt zu Grunde, Partikel mit hoher Formanisotropie aus einem anisotropen Material herzustellen, so dass die Partikel selbst bevorzugt bereits anisotrope optische Eigenschaften besitzen oder welchen anisotrope optische Eigenschaften beispielsweise durch Färben verliehen werden, und diese auf einem Substrat zu immobilisieren und zwar derart, dass die Partikel mit einer gewissen Vorzugsorientierung auf dem Substrat vorliegen.

Es muss darauf hingewiesen werden, dass unter einem Partikel im Sinne der vorliegenden Erfindung nicht Einzelmoleküle zu verstehen sind, sondern vielmehr starre formanisotrope Mikrokristallite oder starre formanisotrope orientierte Aggregate.

Gemäss einer ersten bevorzugten Ausführungsform der vorliegenden Erfindung handelt es sich bei den Partikeln um Partikel, welche optisch aktive, insbesondere farbgebende Spezies (Farbstoffe) in uniaxial orientierter Form enthalten, wobei es sich bei den Spezies insbesondere bevorzugt um dichroische Farbstoffe handelt. Ganz besonders bevorzugt handelt es sich bei den Farbstoffen um fotolumineszierende Farbstoffe, so dass das optische Element anschliessend fotolumineszierende Eigenschaften aufweist bei gleichzeitiger polarisierter Emission und/oder Absorption. Dies bedeutet, dass das optische Element vorzugsweise durch Bestrahlung mit elektromagnetischer Strahlung einer Wellenlänge zwischen 200 und 400 nm zur Lumineszenz angeregt werden kann, und dass entweder die Absorption im UV-Bereich polarisiert ist und/oder die Emission im sichtbaren Bereich polarisiert ist. Auf jeden Fall kann ein derartiges optisches Element beispielsweise als Sicherheitselement Verwendung finden, da es bei Betrachtung durch einen rotierenden Polarisationsfilter und/oder bei Bestrahlung mit Licht rotierender Polarisationsrichtung einen sogenannten Flip/Flop Effekt zeigt.

Derartige Effekte lassen sich insbesondere dann gut feststellen, wenn die Partikel im Schnitt ein dichroisches Verhältnis in Absorption und/oder Emission von mehr als 2, bevorzugt von mehr als 5, insbesondere bevorzugt von mehr als 10 aufweisen. Oder entsprechend auf makroskopischer Ebene ausgedrückt erweist es sich als vorteilhaft, wenn das Element an sich ein dichroisches Verhältnis in Absorption und/oder Emission von mehr als 2, bevorzugt von mehr als 5, insbesondere bevorzugt von mehr als 10 aufweist.

Wie bereits erwähnt, müssen die Partikel die Eigenschaft aufweisen, beim Herstellungsprozess des optischen Elementes eine bevorzugte Ausrichtung anzunehmen. Dies wird erreicht, indem die Partikel eine Formanisotropie aufweisen. Unter Formanisotropie ist dabei zunächst eine dreidimensionale Form zu verstehen, welche unter Einwirkung von Scherkräften in einer flüssigen Matrix dazu führt, dass sich die Partikel ausrichten. Ob eine derartige Ausrichtung tatsächlich stattfindet, hängt einerseits von der dreidimensionalen Form der Partikel ab, andererseits aber auch von der Viskosität der Matrix sowie entsprechend der Temperatur, da ansonsten die beim Herstellungsprozess auftretenden Scherkräfte geringer sind als die thermische Bewegung der Partikel und somit keine Orientierung stattfindet. Rein empirisch lässt sich somit die Formanisotropie definieren als eine durchschnittliche dreidimensionale und starre Form der Partikel, welche, wenn entsprechenden Scherkräfte ausgesetzt, zu einer makroskopisch feststellbaren Orientierung Anlass gibt. Auf mikroskopischer Ebene der Partikel, bedeutet dies, dass im Durchschnitt die Partikel eine bevorzugte Achse aufweisen sollten, was beispielsweise der Fall ist, wenn die Partikel stäbchenförmig sind. Streng mathematisch lässt sich dies beispielsweise auch so ausdrücken, dass die Partikel im Mittel eine Form aufweisen, welche bei einer Hauptachsen-Analyse eine lange Hauptachse aufweisen, welche wesentlich länger ist als die beiden orthogonal dazu stehenden Hauptachsen.

Gemäss der Erfindung sind entsprechend die Partikel dadurch gekennzeichnet, dass sie eine mittlere Formanisotropie (definiert als Länge der langen Hauptachse dividiert durch den Mittelwert der beiden kürzeren Hauptachsen) > 1.5, bevorzugt > 2, insbesondere bevorzugt > 5 aufweisen. Um die typischerweise in Streichprozessen verwendeten Matrixmaterialien (beispielsweise wässrige Suspension der Partikel) bei den typischerweise in Streichprozessen verwendeten Temperaturen benutzen zu können, zeigt es sich, dass die formanisotropen Partikel in der Richtung ihrer langen Hauptachse eine mittlere Länge im Bereich von 50 nm bis 500 µm aufweisen müssen. Ein besonders homogenes Erscheinungsbild (d. h. ohne sichtbare Feinstruktur) lässt sich erreichen, wenn die formanisotropen Partikel in der Richtung ihrer langen Hauptachse eine mittlere Länge im Bereich von 100 nm bis 100 µm, bevorzugt im Bereich von 150 nm bis 500 nm aufweisen.

Dabei ist es je nach Herstellungsprozess respektive Art und Weise der Partikel möglich, dass die optische Hauptachse der Partikel eine beliebige Richtung relativ zur räumlichen Hauptachse der Partikel einnimmt. Häufig, und dies ist auch im vorliegenden Fall bevorzugt, ist aber die Hauptachse der optischen Anisotropie der Partikel im wesentlichen parallel zur langen Hauptachse der Formanisotropie oder senkrecht zu dieser angeordnet.

Als Material für die Partikel kommen grundsätzlich Materialien in Frage, welche dazu geeignet sind, Farbstoffe in orientierter Art und Weise aufzunehmen respektive sich so verarbeiten lassen (beispielsweise durch Spritzen durch eine Düse, durch Ziehen oder durch Recken), dass die Farbstoffe im Material eine bevorzugte Orientierung annehmen welche zu anisotropen optischen Eigenschaften Anlass gibt. Andererseits sollten die Materialien zu Partikeln verarbeitet werden können, welche eine Formanisotropie im obigen Sinne aufweisen. Einerseits kommen synthetische Materialien wie Polyethylen, Polypropylen, Aramid, Polyamid, Polyacrylat, Polyacrylonitril, Poly(vinylalkohol), Poly(vinylacetat), Poly(ethylenterephthalat), Poly(stryrol), Poly(tetrafluorethylen) oder Derivate, Copolymere resp. Mischungen davon in Frage. Andererseits kommen aber auch natürliche Materialien auf Basis von Holz, insbesondere Cellulose aus beispielsweise Holz, insbesondere Nadelholz, Reisstroh, Baumwolle, Gras, Flachs, Hanf, Bast, Leinen, Jute, Zuckerrüben, aber auch aus Bakterien wie Acetobacter xylinum, Algen wie Valonia und Seelebewesen wie Tunicae in Frage. Darüber hinaus kommen Materialien aus regenerierter Cellulose wie Rayon, Cellophan, Viskose, Lyocell, sowie Derivate wie Celluloseacetate oder Cellulosebutyrate, in Frage. Ebenfalls mögliche Materialien sind Chitin, beispielsweise aus Krustentieren oder Pilzen, Polysaccharide wie β 1→3 Glucan, β 1→3 Xylan und β 1→4 Mannan, beispielsweise aus Pilzen oder Algen. Ebenfalls möglich sind kristalline Materialien so zum Beispiel Kristalliten wie Böhmit, Vanadium Pentoxid, FeOOH, welche mit geeigneten Farbstoffen gefärbt werden können, ebenso wie Kristalliten von Einschlussverbindungen geeigneter Farbstoffe mit Harnstoff, Thiohamstoff, Cyclodextrinen, Ceolithen und Schichtmineralien.

Ganz besonders bevorzugt als Material für die Partikel ist so genannte mikrokristalline Cellulose. Insbesondere regenerierte, gereckte Cellulose wie Lyocell, wobei diese mikrokristalline Cellulose insbesondere bevorzugt im wesentlichen frei ist von amorphen Bestandteilen.

Bei mikrokristalliner Cellulose handelt es sich um ein Produkt, welches durch Hydrolyse von Cellulose erhalten werden kann. Bei Cellulose handelt es sich bekanntermassen um ein Polymer natürlichen Ursprungs mit komplexer Struktur aus amorphen und kristallinen Domänen. Cellulose lässt sich durch Einwirkung aggressiver Spezies, beispielsweise Salzsäure oder Schwefelsäure, hydrolysieren. Durch geeignete Wahl der Prozessbedingungen, insbesondere der Konzentration, Temperatur, und Zeit, ist es möglich, die Hydrolyse an einem bestimmten Punkt abzubrechen. Ausserdem ist es möglich, die Bedingungen so zu wählen, dass die amorphen Domänen der Cellulose selektiv hydrolysiert werden und eine Hydrolyse der kristallinen, chemisch resistenteren Domänen weitgehend zu vermeiden. Das dadurch erhaltene Produkt ist bekannt als mikrokristalline Cellulose, Mikrocellulose, 'level-off-Cellulose, 'level-off DP'-cellulose oder 'MCC'. Siehe dazu beispielsweise "Encyclopedia of Polymer Science and Technology", Vol. 3, 1965, p. 285-290.

Mikrokristalline Cellulose ist eine sehr reine Form von Cellulose mit ungewöhnlich hohem Grad an Kristallinität. Die Mikrokristallite sind oft stäbchenförmig und weisen Längen im Mikro- bis Nanometerbereich auf.

Einen umfassenden Überblick über den Stand der Technik in diesem Gebiet gibt beispielsweise Macromol. Rapid Commun., 25, 2004, 771-787, "Rodlike Cellulose Microcrystals: Structure, Properties, and Applications". Diese Publikation behandelt auch optische Effekte von Suspensionen aus MCC, die sich aus den doppelbrechenden Eigenschaften der optisch anisotropen MCC-Kristallite ergeben.

Eine Vielzahl von Quellen beschreibt die Herstellung mikrokristalliner Cellulose (MCC). Bekannt sind unter Anderem MCC's aus Hölzern, insbesondere Nadelhölzern, Baumwolle, Reisstroh, regenerierter Cellulose wie Rayon und Cellophan, Flachs, Hanf, Bast, Zuckerrüben, aber auch aus Bakterien wie Acetobacter xylinum, Algen wie Valonia und Seelebewesen wie Tunicae. Je nach Wahl der Quelle unterscheiden sich die erhaltenen MCC-Produkte ganz deutlich in ihren Eigenschaften. So ergeben Cellulosen aus Hölzern bekanntermassen Mikrokristallite geringer Länge und einem eher geringen Formfaktor, Cellulosen aus Baumwolle solche mit höheren Formfaktoren. Cellulose-Mikrokristallite mit ausserordentlich hohen Formfaktoren können beispielsweise aus Tunicae gewonnen werden. Die Gewinnung von MCC aus dieser Quelle ist bekanntermassen sehr aufwändig.

Verschiedene Qualitäten von MCC's sind kommerziell erhältlich und werden beispielsweise von FMC Biopolymers, Hamburg, Deutschland oder Microcellulose Weissenborn, Weissenborn, Deutschland, angeboten. MCC wird eingesetzt als Emulgator und Verdicker in der Lebensmittelindustrie, als Thixotropiermittel für Farben und Lacke, als Tablettiermittel oder Tablettengrundstoff in der Pharmazie, oder als Füllstoff in der Kunststoffindustrie.

Als besonders geeignet im Sinne der Erfindung haben sich MCC's aus regenerierter Cellulose herausgestellt. Insbesondere MCC's aus gereckten Fasern, insbesondere Lyocell-Fasern, haben sich als wertvoll im Sinne der Erfindung erwiesen.

Es ist bekannt, dass MCC gefärbt werden kann, wie beispielsweise in Macromolecules, 31, 1998, 3936-3944 beschrieben. Auch ist es möglich, MCC mit hydrophoben Spezies einzufärben, die zu anderen Cellulosequellen nur geringe oder gar keine Affinität aufweisen. Siehe dazu beispielsweise Langmuir, 11, 1995, 231-236 oder Photochem. Photobiol. Sci., 1, 2002, 198-203.

Es ergibt sich somit die Möglichkeit, mittels MCC als Farbstoffträger hydrophobe Farbstoffe, die üblicherweise mit wässrigen Systemen inkompatibel sind, in solche einzubringen. Bemerkenswerterweise sind anisotrope optische Eigenschaften, insbesondere polarisierte Absorption und/oder Emission gefärbter MCC's im Stand der Technik völlig unbekannt.

Durch geeignete Verfahren ist es möglich, MCC in nicht-polaren Lösungsmitteln zu dispergieren und daraus zu verarbeiten. Siehe dazu beispielsweise Langmuir, 16, 2000, 8210-8212, "Nonflocculating and Chiral-Nematic Self-ordering of Cellulose Microcrystals Suspensions in Nonpolar Solvents". Es ergibt sich somit die Möglichkeit, mittels oberflächenmodifizierter MCC als Farbstoffträger hydrophile Farbstoffe, die üblicherweise mit lösungsmittelbasierten Systemen inkompatibel sind, in solche einzubringen.

Gemäss einer weiteren bevorzugten Ausführungsform ist entsprechend die mikrokristalline Cellulose modifiziert, insbesondere bevorzugt oberflächenmodifiziert, und damit in organischen Lösungsmitteln dispergierbar respektive suspendierbar, wobei diese Modifikation insbesondere durch Einführung von bipolaren Elementen (tensidische Bestandteile) hervorgerufen wird.

Besonders bevorzugtermassen ist die mikrokristalline Cellulose mit einem dichroischen fotolumineszierenden Farbstoff eingefärbt. Ausserdem können die Partikel mit hydrophoben Farbstoffen eingefärbt sein.

Die Partikel werden in einer Matrix aufgeschlämmt, in welcher die Partikel nicht löslich sind oder zumindest nicht innerhalb der Verarbeitungszeit bei der Verarbeitungstemperatur löslich sind. Als Matrix kommen dabei Materialien auf Basis von makromolekularen Substanzen wie Carboxymethylcellulose, Hydroxyethylcellulose, Acrylaten, Acetaten, Gelatine, Stärke, Poly(vinylalkohol) und Poly(vinylamin) oder Mischungen davon in Frage. Die Matrix liegt in getrockneter und/oder zusätzlich vernetzter Form vor. Selbstverständlich kann diese Matrix zusätzliche Additive wie Verträglichkeitsvermittler, Viskositätsmodifikatoren, Stabilisatoren u.ä. enthalten. Ausserdem ist es möglich, kombinierte optische Elemente herzustellen indem die Matrix zusätzlich weitere optische Elemente wie nicht-polarisierende (aber fotolumineszierende) Partikel, Melierfasern, Planchetten, irisierende Pigmente, Metallpigmente, thermochrome oder photochrome Pigmente oder Farbstoffe, Anti-Stokes Pigmente oder Farbstoffe (sogenannte Up-Converter) enthält. Weiterhin ist es möglich, in der Matrix magnetische Elemente und/oder elektrisch leitfähige Elemente und Elemente zur Kennzeichnung und Identifizierung (sogenannte 'Taggants') einzubetten respektive gemeinsam mit den Partikeln einzubringen.

Typischerweise handelt es sich bei dem optischen Element um eine Schichtstruktur auf einem Substrat. Möglich sind dabei auch Mehrschichtstrukturen. Als Substrat kommen unterschiedliche Träger in Frage, so beispielsweise Papier, Sicherheitspapier (beispielsweise Banknotenpapier), Kunststofffolien oder Kombinationen davon. Bei der Beschichtung kann es sich um einen Strich, einen Druck oder eine Leimung handeln.

Weiterhin betrifft die vorliegende Erfindung Verfahren zur Herstellung eines Sicherheitsartikels mit einem optischen Elementwie oben dargelegt . Besonders optisch wirksam lässt sich dabei das optische Element auf oder in einen Sicherheitsartikel einsetzen, wenn Bereiche, insbesondere bevorzugt aneinander grenzende Bereiche verhandeln sind, in welchen optische Elemente angeordnet sind, welche sich in wenigstens einer oder einer Kombination der folgenden Eigenschaften unterscheiden: Polarisationsrichtung, Polarisationsintensität, (Fluoreszenz-)Farbe, (Fluoreszenz-)Farbintensität, Nachleuchtdauer, Partikeldichte, Partikeldimensionen, Partikelart, Anregungswellenlänge. Ganz besonders vorteilhaft ist beispielsweise ein Sicherheitsartikel mit Bereichen als aneinander grenzende gestrichene Streifen mit unterschiedlicher optischer Erscheinung. Die unmittelbar nebeneinander liegenden unterschiedlichen Bereiche führen durch den relativen Kontrast zu einer erhöhten optischen Wirkung.

Grundsätzlich kommen derartige optische Elemente somit als Sicherheitselemente in Frage für sämtliche Artikel, deren Fälschung verhindert werden soll. Derartige Anwendung finden sich beispielsweise aber nicht ausschliesslich im Rahmen von Artikeln wie Banknoten, Checks, Aktien, Obligationen, Ausweise, Pässe, Führerausweise, Eintrittskarten, Briefmarken, Bankkarten, Kreditkarten, Trägermaterial, Aufreissfäden, Beipackzetteln, (Tax-)Marken, Visumsetiketten, Verpackungsmaterialien, Zigarettenpapieren etc..

Eine andere interessante Anwendungsform des optischen Elementes besteht darin, dieses zunächst als Schicht derart auf ein Trägermaterial aufzubringen, dass beim Aufbringen die gewünschte Orientierung der Partikel bewirkt wird. Anschliessend kann in einem Transferprozess das optische Element als Beschichtung unter Anwendung von Wärme und/oder Druck auf ein anderes Substrat beispielsweise dort als Sicherheitsmerkmal aufgebracht werden. Entsprechende Träger- und Transfersysteme sind aus dem Gebiet der Folienapplikation, beispielsweise der Hologrammapplikation, bekannt.

Mithin betrifft die vorliegende Erfindung ein Verfahren zur Herstellung eines optischen Elementes, wie es oben beschrieben wurde respektive eines Sicherheitsartikels wie es oben beschrieben wurde oder eines Trägermaterials, wie es oben beschrieben wurde. Dabei werden vorzugsweise die Partikel in Form einer bevorzugt wässrigen (alternativ ist auch ein Lösungsmittel oder eine Mischung von Lösungsmitteln möglich) Suspension respektive Aufschlämmung auf ein Substrat derart aufgebracht, dass im Auftragungsprozess auftretende Scherkräfte zu einer bevorzugten Ausrichtung der formanisotropen Partikel führen und diese bevorzugte Ausrichtung in einem anschliessenden oder simultanen Trocknungsprozess und/oder Vernetzungsprozess der Matrix im optischen Element bleibend stabilisiert wird. Die Suspension kann dabei eine Viskosität im Bereich von 10 bis 1000 mPas, von 10-300 mPas haben, und sogar hochviskos oder pastös sein. Bei einem Rakelauftrag der Suspension erweisen sich Fortbecher-Viskositäten bei einer Düsenöffnung von 4 im Bereich von 4-50 als nützlich. Ein Wert von 4 entspricht Wasser, ab 40 bilden sich Schleifspuren des Rakels.

Gemäss einer bevorzugten Ausführungsform des Verfahrens handelt es sich beim Auftragungsprozess um einen Streichprozess. Dieses Auftragungsverfahren führt naturgemäss zu Scherkräften im Moment der Aufbringung der Suspension auf das Substrat und bewirkt entsprechend eine wirksame Orientierung. Insbesondere bevorzugt findet der Streichprozess unter Verwendung eines Rakels, eines Stabes, einer Klinge oder eines Balkens statt. Alternativ ist es auch möglich, als Auftragungsprozess eine Leimung, oder ein Druckverfahren wie z. B. Tampondruck oder Siebdruck zu verwenden. Möglich ist ausserdem bevorzugt die Verwendung eines gegendrehenden Rakels zur Erhöhung der Scherkräfte, ebenfalls möglich ist die Verwendung einer Transferwalze, bei welcher die Orientierung gewissermassen bei der Auftragung auf die Walze mit einer Gegenwalze oder mit einem Rakel vorgebildet oder ausgebildet wird. Ebenfalls ist es möglich, den Ausrichtungsprozess durch zusätzliche Mittel wie beispielsweise Anlegen eines elektrostatischen Feldes oder Anlegen eines magnetischen Feldes zu unterstützen.

Weiterhin beschreibt die vorliegende Erfindung ein Verfahren zur Herstellung von Partikeln, welche zur Verwendung im genannten Verfahren geeignet sind. Dabei werden die Partikel durch Hydrolyse von Cellulose unter Beseitigung von amorpher Cellulose hergestellt, wobei insbesondere bevorzugt die Partikel vor, während, und/oder nach der Hydrolyse mit bevorzugt lumineszierenden Farbstoffen eingefärbt werden. Alternativ ist es möglich, die Partikel durch Mahlen von insbesondere bevorzugt faserförmiger Cellulose wie Lyocell herzustellen, wobei entweder die faserförmige Cellulose und/oder die gemahlenen Partikel mit bevorzugt lumineszierenden Farbstoffen eingefärbt werden.

Gemäss einer weiteren bevorzugten Ausführungsform des Verfahrens wird das optische Element nach dessen Herstellung nachbehandelt, wobei entweder bereits vorhandene linear polarisierte Emission respektive linear polarisierte Absorption bereichsweise durch chemische Behandlung wieder rückgängig gemacht wird, oder noch nicht vorhandene, latent vorhandene linear polarisierte Emission respektive linear polarisierte Absorption durch chemische Behandlung bereichsweise aktiviert wird, wobei es sich bei der chemische Behandlung insbesondere bevorzugt um pH Modifikationen, oder Änderungen im Redoxpotenzial oder Komplexierung mit Metallionen oder fotochemische Behandlung, insbesondere Belichtung, handeln kann. Die chemische Behandlung kann dabei in einem konventionellen Druckverfahren erfolgen.

Weitere bevorzugte Ausführungsformen sind in den abhängigen Ansprüchen beschrieben.

### KURZE ERLÄUTERUNG DER FIGUREN

Die Erfindung soll nachfolgend anhand von Ausführungsbeispielen im Zusammenhang mit den Zeichnungen näher erläutert werden. Es zeigen:
- Fig. 1: Beschichtung mittels Stab;
- Fig. 2: Beschichtung mittels Balken ('Bar');
- Fig. 3: Beschichtung mittels Klinge ('Blade');
- Fig. 4: Beschichtung mittels Rakel;
- Fig. 5: Beschichtung mittels gegendrehendem Rakel;
- Fig. 6: Beschichtung mittels Walze;
- Fig. 7: Beschichtung mittels Schlitzdüse;
- Fig. 8: Beschichtung mittels Transferwalze/Gegenwalze;
- Fig. 9: Beschichtung mittels Transferwalze/Rakel
- Fig. 10: Ausrichtung mittels elektrostatischem Feld (Beflockung);
- Fig. 11: Vernetzung bei vorherrschender Scherung;
- Fig. 12: Beschichtung mittels Dreiwalzenwerk; und
- Fig. 13: Beschichtung mittels Leimpresse.

### WEGE ZUR AUSFÜHRUNG DER ERFINDUNG

Es ist bekannt, dass sich Partikel mit ausreichend hohem Formfaktor und ausreichender Steifigkeit, welche beispielsweise in einem ausreichend viskosen Medium verteilt vorliegen, beispielsweise bei Scherung in Scherungsrichtung parallel zueinander ausrichten. Diese Vorzugsorientierung bleibt auch dann eine gewisse Zeit bestehen, wenn die Scherspannung nicht weiter anliegt. Die bestehende Ausrichtung geht durch thermische Bewegung langsam verloren, und zwar umso rascher, je kleiner die Partikel sind, und je niederviskoser das Dispergier- resp. Suspensionsmedium ist.

Beispielsweise ist es nun möglich, Partikel 20 mit hoher Formanisotropie aus diversen Stoffen zu suspendieren und diese Suspension auf einen Träger, eine Substrat 30 aufzustreichen. Dabei werden die Partikel 20 mit einer gewissen Vorzugsorientierung, die normalerweise der Streichrichtung entspricht, ausgerichtet. Durch Verfestigen, beispielsweise durch Trocknen oder Vernetzen der Beschichtung, wird die Vorzugsorientierung fixiert.

Weisen die Partikel 20 optisch anisotrope Eigenschaften auf, wird sich auch ein solcher Strich durch eine gewisse makroskopische optische Anisotropie auszeichnen, auch und insbesondere dann, wenn die Einzelpartikel 20 von ihrer geringen Grösse her nicht als solche zu erkennen sind.

Eine optisch anisotrope Eigenschaft ist beispielsweise die Doppelbrechung. Eine weitere optisch anisotrope Eigenschaft ist beispielsweise die polarisierte Absorption gegebenenfalls in Kombination mit Fluoreszenz. Werden anisotrope Materialien mit geeigneten Farbstoffen gefärbt, weisen diese polarisierte Absorption auf. Eine weitere optisch anisotrope Eigenschaft ist beispielsweise die polarisierte Emission. Werden anisotrope Materialien mit geeigneten Fluoreszenzfarbstoffen gefärbt, weisen diese polarisierte Emission auf. Es können sowohl positiv wie negativ dichroische Farbstoffe Verwendung finden. Kombinationen von positiv und negativ dichroischen Farbstoffen sowie von dichroischen und nicht dichroischen Farbstoffen und/oder Sensitizern sind möglich.

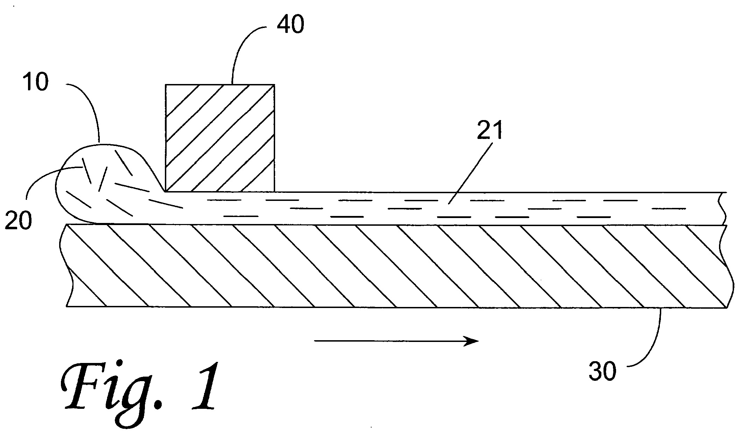

Die unterschiedlichen Verfahren zur Herstellung eines optischen Elementes im Sinne der vorliegenden Erfindung sind in den Figuren 1-13 schematisch dargestellt.

Fig. 1 zeigt eine Beschichtung eines Substrates, welches in Pfeilrichtung befördert wird, mit einer Formulierung 10. Es handelt sich dabei um einen Streichprozess. Diese Formulierung enthält einerseits ein Matrixmaterial 21, und andererseits formanisotrope Partikel 20. Da die Formulierung 10 über einen Stab 40 aufgetragen wird, an welchem die als Suspension vorliegende Formulierung zwischen das verschobene Substrat 30 und dem Stab 40 geführt wird, treten Scherkräfte auf, welche zu einer figürlich in Fig. 1 dargestellten Ausrichtung der Partikel 20 führt.

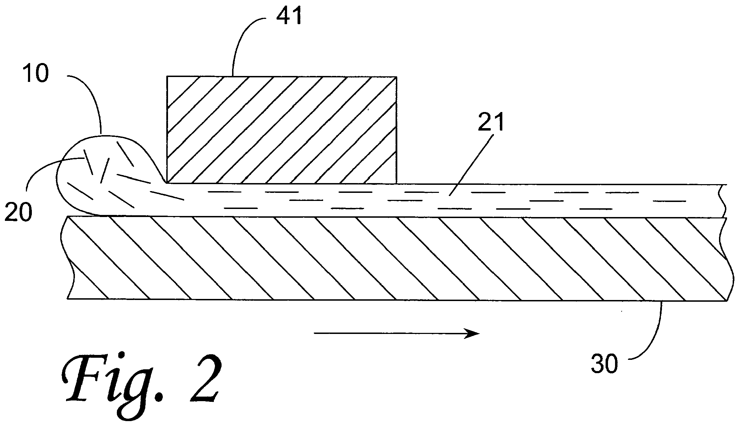

Fig. 2 zeigt eine analoge Situation, wobei hier nun an Stelle eines Stabes 40 ein so genannter Balken 41 verwendet wird, bei welchem die Zeitspanne, in welcher die Formulierung 10 den Scherkräften ausgesetzt ist, noch grösser ist.

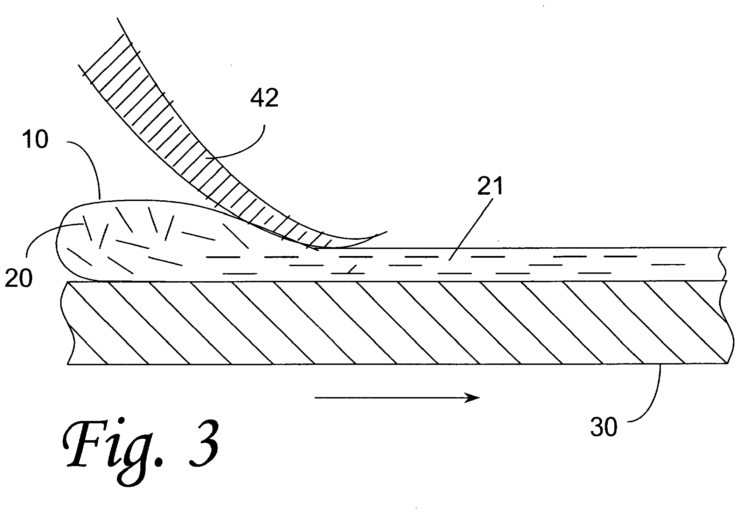

Fig. 3 zeigt ebenfalls eine weitere analoge Situation, wobei hier als Engpass eine Klinge ('Blade') verwendet wird. Beigeeigneter Wahl der Viskosität der Formulierung und der grösser respektive Formanisotropie der Partikel 20 findet auch hier eine genügende Orientierung der Partikel 21 statt.

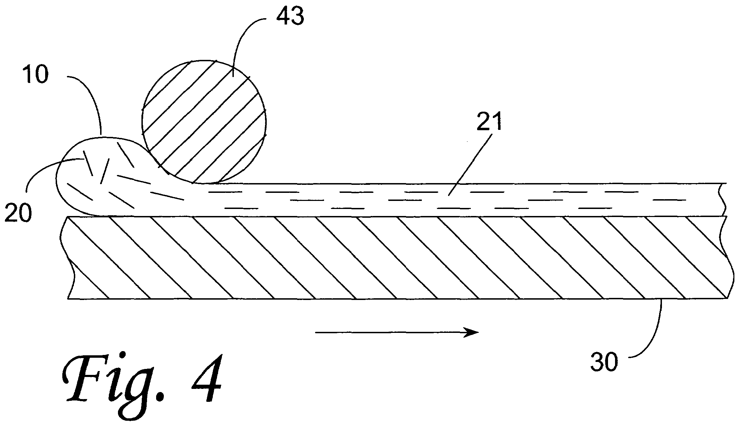

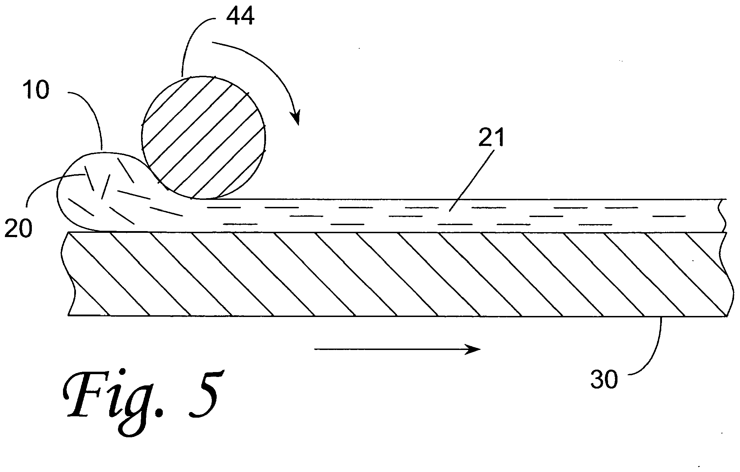

Fig. 4 zeigt die Auftragung in einem Streichprozess unter Verwendung eines Rakels 43. Ein derartiges Rakel ist typischerweise zylindrisch und verfügt an seiner Oberfläche um eine Struktur, wie sie durch wickeln eines feinen Drahtes um den Zylinder erhalten wird. Um in einem derartigen Auftrag die Scherkräfte zu erhöhen, kann es sich als vorteilhaft erweisen, wie dies in Fig. 5 dargestellt ist, das Rakel 44 gegen die Laufrichtung des Substrates 30 rotieren zu lassen.

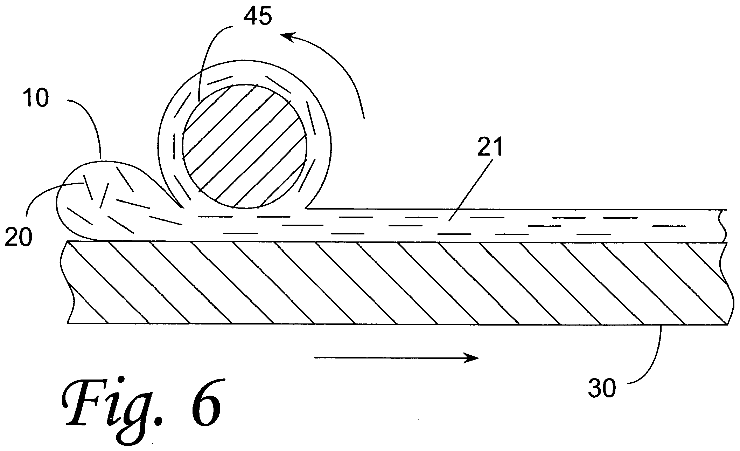

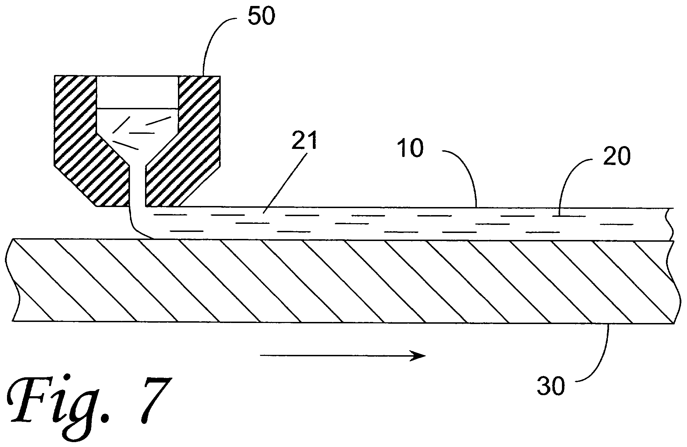

Fig. 6 zeigt die Situation eine Auftragung unter Verwendung einer Walze 45, welche sich mit dem Substrat 30 mitdreht, und Fig. 7 zeigt die Situation der Verwendung einer Schlitzdüse 50. In beiden Situationen findet ebenfalls eine Orientierung statt.

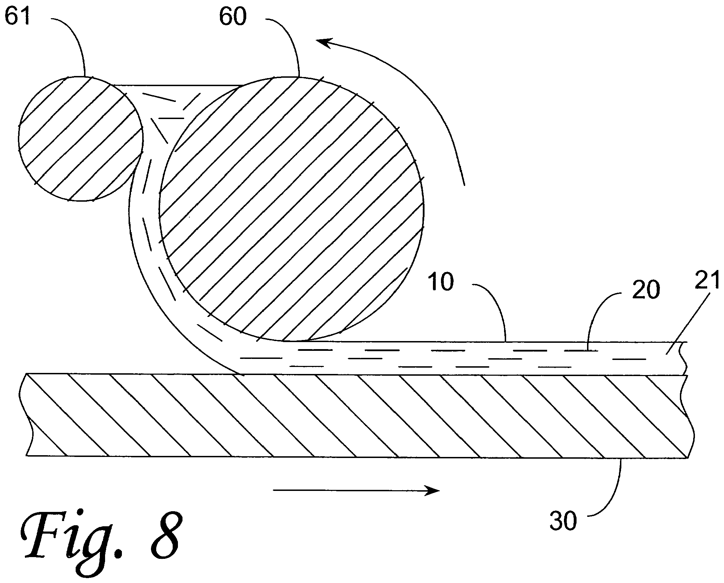

Fig. 8 zeigt die Möglichkeit einer Auftragung unter Verwendung einer Walze 60, welche als Transferwalze dient. Gegen eine derartige Auftragswalze 60 wird ein Rakel 61 geführt. Die Orientierung der Partikel 20 findet hier einerseits zwischen Rakel 61 und Auftragswalze 60 statt, andererseits aber auch weiter zwischen der Auftragswalze 60 und dem Substrat 30. zur Erhöhung der Ausrichtung ist es möglich, das Rakel 61 gegenläufig rotieren zu lassen.

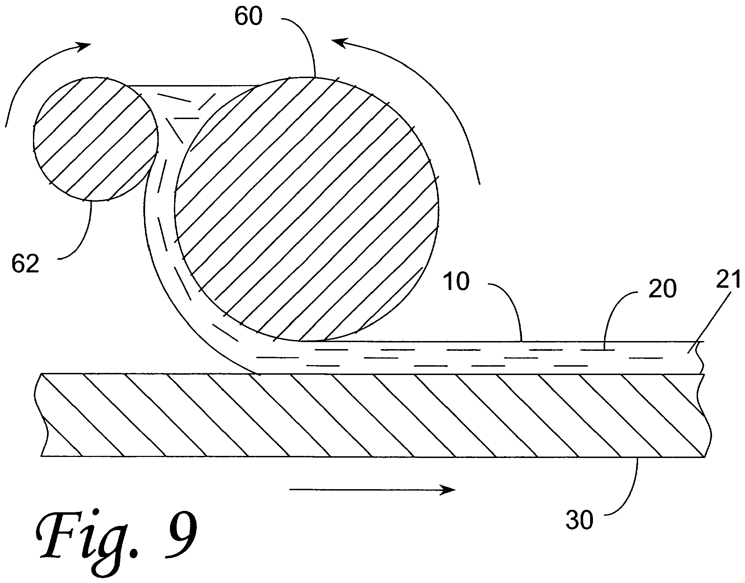

Wie in Fig. 9 dargestellt, kann an Stelle eines Rakels 61 auch eine Gegenwalze 62 verwendet werden.

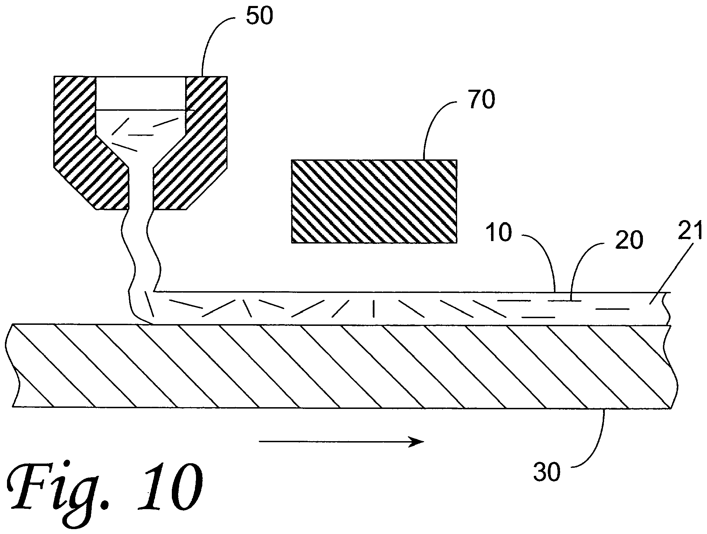

In Fig. 10 ist ein Prozess dargestellt, bei welcher die Orientierung nicht durch die verwendete Schlitzdüse zu Stande kommt, sondern durch nachträgliche Einwirkung eines äusseren Feldes, wie beispielsweise ein durch ein so genanntes elektrostatisches Beflockungsgerät 70 erzeugtes elektrostatisches Feld oder durch ein Magnetfeld, welches die Partikel, wenn diese geeignet ausgestaltet sind, beispielsweise Oberflächenladungen besitzen, ausrichtet. Auch dieses Verfahren kann selbstverständlich mit einem Auftragsverfahren gemäss einer der Figuren 1-9 kombiniert werden, um die Ausrichtung der Partikel zu verbessern.

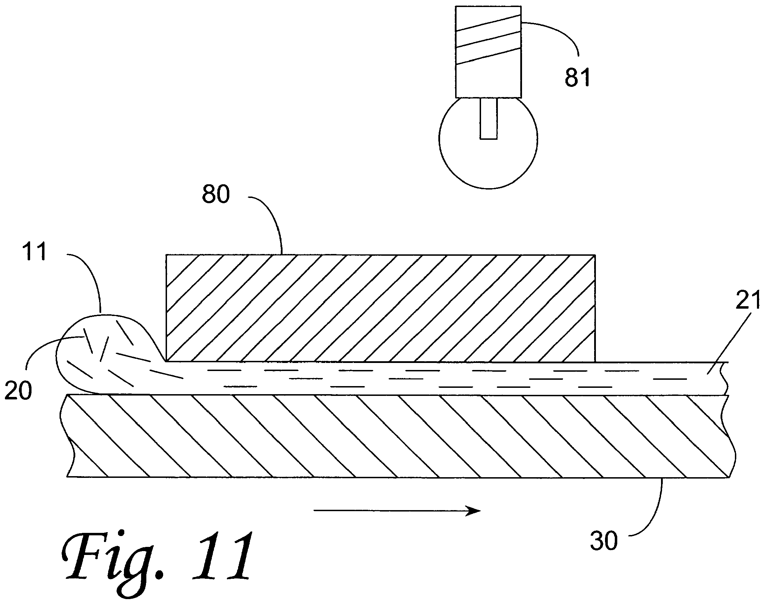

Wie bereits erwähnt ist es einerseits möglich, die Matrix 21 trocknen zu lassen, andererseits ist es aber auch möglich, die Stabilisierung des Systems zusätzlich durch eine Vernetzung zu unterstützen. Dabei kann die Matrix 21 in sich vernetzt werden, es ist aber auch möglich, zusätzlich oder gleichzeitig eine Vernetzung von Matrix und Partikeln zu bewirken. Dazu wird, wie in Fig. 11 figürlich dargestellt, mit einer Lampe 81, typischerweise hoch energetische elektromagnetische Strahlung, die Vernetzung ausgelöst, gegebenenfalls unterstützt durch in der Matrix 21 vorhandenen Komponenten. Erfolgt die Vernetzung wie in Fig. 11 dargestellt bei anliegender Scherspannung, beispielsweise unter Zuhilfenahme einer transparenten Scheibe als Streichwerkzeug, kann weitgehend vermieden werden, dass sich die Ausrichtung der Partikel 20 beim Hervortreten unter dem Streichwerkzeug durch auftretende Turbulenzen verschlechtert.

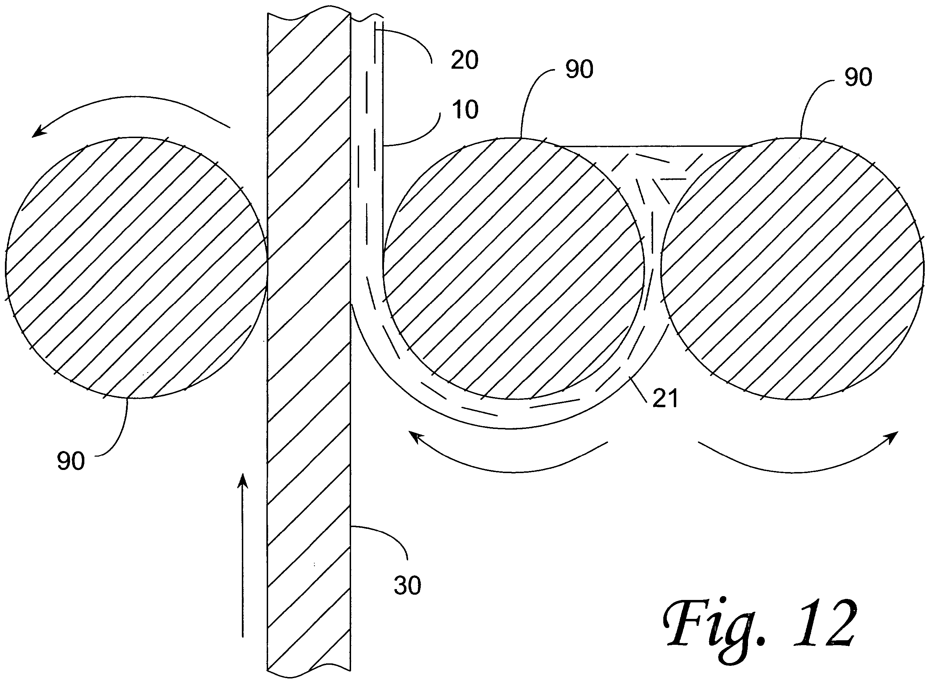

Fig. 12 zeigt die Beschichtung unter Zuhilfenahme eines Dreiwalzenwerks. Auch hier findet die Orientierung zunächst zwischen den zwei Walzen 90 statt, und weiterhin bei der effektiven Auftragung auf das Substrat 30.

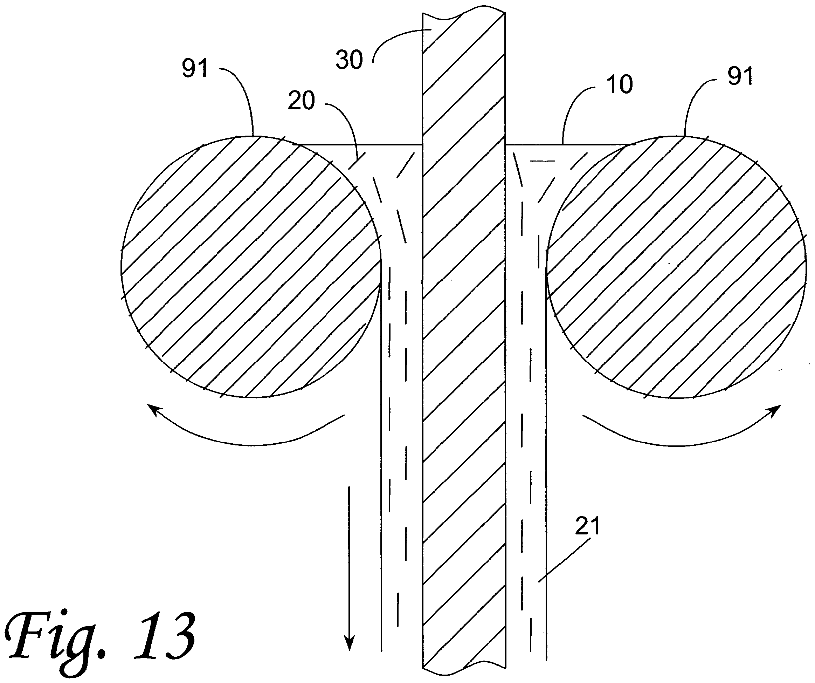

Fig. 13 zuletzt zeigt die Auftragung unter Zuhilfenahme einer so genannten Leimpresse. Auch hier genügen bei entsprechender Einstellung der Rotationsgeschwindigkeit der Walzen 91 und der Fördergeschwindigkeit des Substrates 30 die auftretenden Scherkräfte für eine Ausrichtung der Partikel 20.

Konkret ist es gelungen, Fasern aus regenerierter Cellulose (Lyocell, 0.9 dtex) mit einem Fluoreszenzfarbstoff (Pergasol Flavin 7G) zu färben, diese Fasern mit verdünnter Salzsäure zu hydrolysieren, die somit gewonnene Mikrocellulose abzufiltrieren, diese in einer 1%-igen Lösung aus Carboxymethylcellulose (CMC) fein zu suspendieren, und mit dieser streichfähigen Paste im Streichverfahren mittels Rakel (vgl. Fig. 4 und 5) eine Beschichtung auf ein Sicherheitspapier 30 aufzubringen, welche sich durch eine ebenmässige, polarisierte Absorption und Emission auszeichnete.

Bei Betrachtung in UV-Licht, welches durch einen rotierenden Polarisationsfilter trat und daher eine lineare Polarisation aufwies, die sich periodisch drehte, zeigte der Strich eine gelb-grüne Fluoreszenz mit periodisch an- und abschwellender Intensität mit einem deutlich erkennbaren Unterschied zwischen maximaler und minimaler Intensität.

Durch die Möglichkeit, Fasermaterial vorgängig zu färben und erst im Anschluss daran zu hydrolysieren, wird die Herstellung von gefärbter MCC wesentlich vereinfacht. Selbstverständlich ist es auch möglich, zuerst die MCC zu gewinnen und diese nachträglich einzufärben. Oft liegt aber MCC in bereits zumindest teilweise suspendierter Form vor, was ein Abfiltrieren von Färbelösungen verunmöglicht, weshalb die MCC durch aufwändige Zentrifugiermethoden zurückgewonnen werden muss. Insbesondere bei Verwendung von MCC aus Tunicae ist dies der Fall.

Partikel 20 aus Cellulose, insbesondere aus mikrokristalliner Cellulose, haben sich als besonders geeignet im Sinne der Erfindung erwiesen. Ebenfalls möglich sind Partikel aus Chitin, Polysacchariden wie β 1→3 Glucan, β 1→3 Xylan und β 1→4 Mannan. Weitere mögliche Partikel sind Partikel aus Böhmit, Vanadium Pentoxid, FeOOH, welche mit geeigneten Farbstoffen gefärbt werden können, Kristallite von Einschlussverbindungen geeigneter Farbstoffe mit Harnstoff, Thioharnstoff, Cyclodextrinen, Ceolithen und Schichtmineralien, Partikel aus Polymeren wie Poly(vinylalkohol), Poly(vinylacetat), Poly(ethylenterephthalat), Poly(stryrol), Poly(tetrafluorethylen), Cellulosederivaten wie Celluloseacetaten, Cellulosebutyraten, und vielen anderen mehr.

Partikel von unterschiedlichsten Dimensionen haben sich als nützlich im Sinne der Erfindung erwiesen. Auch Agglomerate von Partikeln haben sich als nützlich im Sinne der Erfindung erwiesen. Solche Agglomerate können beispielsweise durch Rühren oder durch Ultraschall zu Partikeln vereinzelt werden. Auch können Dispergierhilfsmittel respektive Suspendierhilfsmittel und Tenside eine Vereinzelung begünstigen. Partikel von einigen hundert Mikrometern Länge, beispielweise gemahlene Fasern aus Lyocell oder Partikel, die durch vorzeitig unterbrochene Hydrolyse von Cellulosefasern gewonnen wurden, sind von blossem Auge noch zu erkennen und konnten trotzdem durch Streichen mit Vorzugsorientierung auf ein Papier aufgebracht werden, oder aber über die Leimflotte in der Leimpresse bei geeigneter Einstellung der Parameter ohne Vorzugsorientierung auf das Papier gebracht werden. Sind diese Partikel mit Fluoreszenzfarbstoffen gefärbt, können sie wie die im Stand der Technik bekannten Melierfasern und Planchetten als Sicherheitsmerkmale verwendet werden. Die polarisierten optischen Eigenschaften der Partikel lassen sich darüber hinaus als zusätzliches Sicherheitsmerkmal verifizieren. Es hat sich als vorteilhaft erwiesen, dass die Partikel nicht im Papier verankert sondern auf dessen Oberfläche vorliegen, da die polarisierten Effekte nicht durch Zellstoff, der Melierfasern gewöhnlicherweise partiell überdeckt, gestört werden. Ausserdem hat sich gezeigt, dass insbesondere Partikel aus cellulosischen Substraten hervorragend auf der Papieroberfläche haften, während Melierfasern - insbesondere wenn sie bevorzugterweise in der Papieroberfläche vorliegen - oft herausfallen und u.a. die Weiterverarbeitung des Papiers stören können.

Einerseits sind Partikel bevorzugt, welche eine Grösse aufweisen, welche wenn zu einem optischen Element verarbeitet, von Auge keine individuellen Partikel mehr erkennen lassen. Bei Verwendung dieser Grösse kann ein besonders homogenes Erscheinungsbild bewirkt werden.

Partikel in Grössendimensionen, die noch von blossem Auge zu erkennen sind, sind aber andererseits zum Beispiel auch wertvoll im Sinne der Erfindung, wenn sie keine Stäbchenform oder nur einen geringen Formfaktor aufweisen. Solche Partikel lassen sich zwar nicht durch Scherung ausrichten, dennoch aber durch die genannten Methoden gewinnen und auf Papier aufbringen. Sind diese Partikel mit Fluoreszenzfarbstoffen gefärbt, können sie im UV-Licht detektiert werden und als Sicherheitsmerkmal analog zu den im Stand der Technik bekannten Planchetten dienen, wobei sie aber wesentlich kleiner sind als die üblicherweise verwendeten Planchetten. Zum Schutz besonders dünner Papiere, wie beispielsweise von Beipackzetteln von Medikamenten oder Zigarettenpapieren, sind übliche Planchetten und Melierfasern ungeeignet, da sie für diese dünnen Papiere zu grob sind und beispielsweise die Weiterverarbeitung oder den Druck stören. Die erfindungsgemässen Partikel bieten in diesem Fall eine wertvolle Alternative. Insbesondere lassen sich ihre polarisierten optischen Eigenschaften als zusätzliches Sicherheitsmerkmal verifizieren.

In gewissen Fällen ergeben sich auch dann bevorzugte Anwendungsformen, wenn keine oder nur eine geringe Vorzugsorientierung der Partikel vorliegt. Eine solche bevorzugte Anwendungsform liegt beispielsweise dann vor, wenn die Partikel eine von Auge erkennbare Grösse aufweisen und auf der Oberfläche eines Papiers analog zu im Stand der Technik bekannten sogenannten Melierfasern Verwendung finden können. Als Vorteil ist dabei zu werten, dass sich solche Partikel problemlos auf eine Papieroberfläche aufbringen lassen, beispielsweise durch Auftrag in der Leimpresse über die Leimflotte. Dadurch kommen die Partikel direkt auf der Oberfläche zu liegen und sind nicht wie Melierfasern üblicherweise von Cellulosefasern überdeckt. Dadurch wird insbesondere die Verifizierung von anisotropen optischen Eigenschaften erheblich erleichtert.

Erfindungsgemässe Partikel können Grössen aufweisen, die eine Erkennung von blossem Auge nicht mehr zulassen. Aus dem Stand der Technik ist bekannt, dass MCC-Kristallite von Längen im Nanometerbereich mit hohen Formfaktoren erzielt werden können. Mikroskopisch kleine Partikel haben sich als besonders geeignet im Sinne der Erfindung erwiesen, da sich damit für das menschliche Auge homogen erscheinende Schichten mit polarisierten optischen Eigenschaften erzielen liessen.

Als ebenfalls attraktiv hat sich die Kombination von groben, von Auge sichtbaren Partikeln mit fein dispergierten oder genauer suspendierten, von Auge nicht sichtbaren Partikeln erwiesen. Dadurch konnten Schichten erzielt werden, die einen homogenen Hintergrund mit optisch anisotropen Eigenschaften aufwiesen und zusätzlich gut sichtbare Partikel beinhalteten, welche entweder mit oder ohne Vorzugsorientierung vorliegen konnten.

Streichfähige Formulierungen aus mehr oder weniger stark suspendierten Partikeln wurden bevorzugterweise mit wässrigen Lösungen aus Carboxymethylcellulose (CMC) erhalten. Als gut geeignet haben sich auch wässrige Lösungen aus Hydroxyethylcellulose (HEC) erwiesen. Selbstverständlich eignet sich eine Vielzahl weiterer Formulierungen, die beispielsweise auf Acrylaten, Acetaten, Gelatine, Stärke, Poly(vinylalkohol) und Poly(vinylamin) basieren. Streichfähige Formulierungen 10 können sich auch aus suspendierter MCC, beispielsweise in Wasser, alleine ergeben.

Ein bevorzugtes Auftragsverfahren ist das Streichverfahren. Das Streichen kann mit Hilfe eines Rakels, eines Stabes, einer Klinge, eines Balkens, einer Luftbürste und anderem mehr erfolgen. Durch Einsatz eines gegendrehenden Rakels kann eine höhere Ausrichtung der Partikel erzielt werden.

Weiter ist es möglich, die Formulierung über eine Walze aufzubringen. Dazu eignet sich beispielsweise eine Leimpresse oder ein Dreiwalzenwerk, aber eine Leimpresse, ein. Speed-Sizer oder eine einfache Transferwalze. Durch Kombination von Transferwalze und Rakel, wie vom Speed-Sizer her bekannt, ist es möglich, auf der Transferwalze eine gerichtete Schicht abzulegen, welche von dieser auf das Substrat übertragen wird.

Weiter kann ein Auftrag mittels Curtain Coater geschehen, auch hier lässt sich bei entsprechender Prozessführung eine Ausrichtung der Partikel erreichen.

Mittels Tampondruckverfahren ist es möglich, eine gewisse Vorzugsorientierung der Partikel zu erreichen. Diese wird in diesem Fall radial ausfallen. Auf diese Art lässt sich eine besonders wünschenswerte Kombination von Strukturierung durch ein Druckverfahren und optische Anisotropie des Druckbildes verwirklichen.

Bei ausreichend kleinen Partikeln ist es auch möglich, diese in gängigen Druckverfahren, insbesondere im Siebdruckverfahren, aufzubringen. Dadurch lässt sich allerdings meist nur wenig Vorzugsorientierung erzielen, die anisotropen optischen Eigenschaften der Einzelpartikel lassen sich aber dennoch feststellen und zur Verifizierung nutzen, insbesondere dann, wenn sie von der Grösse her noch als solche zu erkennen sind. Auch wenn die Einzelpartikel nicht als solche erkennbar sind, hat es sich gezeigt, dass ein ausreichend grosszügig aufgetragener Druck durch spontane Selbstorganisation Domänen mit bevorzugter Ausrichtung ausbildet, was mit geeigneten Methoden sichtbar gemacht werden kann. Ausserdem ist es denkbar, eine im Siebdruck aufgebrachte Paste in noch feuchtem Zustand beispielsweise durch Anlegen einer Scherspannung beispielsweise in einen Streichprozess oder durch Durchführen durch ein Walzenwerk nachträglich zu orientieren. Auch ist es denkbar, eine nachträgliche Orientierung der Partikel in der noch feuchten Formulierung durch elektrostatische Ausrichtung zu erreichen. Geeignete Apparaturen sind von der Beflockungstechnologie her bekannt.

Formulierungen, die fluoreszierende Partikel enthalten, werden bevorzugterweise in Streifenform oder in sonst wie flächig begrenzter Form auf einem Sicherheitspapier aufgetragen. Im UV-Licht ergibt sich dadurch ein guter Kontrast zu dem umliegenden, nicht fluoreszierenden Sicherheitspapier oder zu einem benachbarten Streifen mit anderer Farbe. Bevorzugterweise werden zwei oder mehrere fluoreszierende Formulierungen mit unterschiedlicher Fluoreszenzfarbe kombiniert, um einen visuell besonders attraktiven Effekt zu erzielen.

In einer bevorzugten Ausführungsform wird ein Strich aus einer erfindungsgemässen, polarisiert fluoreszierenden Schicht kombiniert mit einer isotropen Schicht. Werden diese Schichten beispielsweise als zwei direkt aneinander angrenzende Striche kombiniert und in Fluoreszenzfarbe und -intensität aufeinander abgestimmt, lassen sie sich unter unpolarisiertem UV-Licht nicht unterscheiden. Bei Betrachtung in polarisiertem UV-Licht oder durch einen Polarisator können die beiden Striche aber als unterschiedlich identifiziert werden.

Ebenfalls interessant ist die Kombination eines Striches mit einer Formulierung, die Partikel enthält, die mit positiv dichroischen Farbstoffen gefärbt wurde, und eines Striches, der Partikel enthält, die mit einem negativ dichroischen Farbstoff gefärbt wurden. Dabei kann es sich sowohl um sichtbare wie um Fluoreszenzfarbstoffe handeln. Die parallel aufgebrachten Striche unterscheiden sich dann durch phasenverschobene Maxima in polarisierter Absorption und/oder Fluoreszenz.

In einer weiteren bevorzugten Ausführungsform wird in einer erfindungsgemässen Schicht die Vorzugsorientierung lokal zerstört. Es ist beispielsweise möglich, eine noch feuchte Schicht mit einer Prägewalze zu behandeln, so dass an den Kontaktstellen die Vorzugsorientierung der Partikel aufgehoben oder verändert wird. So lassen sich beispielsweise nicht-polarisierende Schriften in einem polarisierenden Hintergrund herstellen. Besonders attraktiv ist die Variante, wo die Prägung und somit die Schrift negativ ausgeführt wird, so dass sich polarisierende Schriften auf nicht-polarisierendem Hintergrund ergeben. Bevorzugterweise ist eine solche Prägung dergestalt auszuführen, dass sich geprägte und ungeprägte Bereiche optisch nicht voneinander unterscheiden. Die Schrift kann dann nur durch Zuhilfenahme eines Polfilters oder unter polarisiertem Licht erkannt werden.

In einer weiteren bevorzugten Ausführungsform wird eine erfindungsgemässe fluoreszierende Schicht durch einen nicht polarisierten, fluoreszierenden Druck teilweise überdruckt. Dies kann sowohl ein Negativ- wie ein Positivdruck sein.

In einer weiteren bevorzugten Ausführungsform wird eine erfindungsgemässe fluoreszierende Schicht durch einen UV-absorbierenden Druck teilweise überdruckt. Dies kann sowohl ein Negativ- wie ein Positivdruck sein.

In einer weiteren bevorzugten Ausführungsform sind die Partikel mit sensitiven Farbstoffen gefärbt, die ihre Absorptions- und/oder Fluoreszenzeigenschaften durch Einwirkung bestimmter Spezies verändern. Beispielsweise kann eine Schicht, die mit Congo Red gefärbte MCC-Partikel enthält, mit einer sauren Lösung aus beispielsweise DBSA (Dodycyl Benzene Sulphonic Acid) überdruckt werden, welche in diesen Bereichen eine blaue Färbung annimmt. Ebenso sind Fluoreszenzfarbstoffe bekannt, die selektiv auf pH-Änderungen reagieren. Andere Möglichkeiten sind Farbstoffe, die mit Metallen komplexieren und durch Überdrucken mit Metallsalzlösungen ihre Absorptions- und/oder Emissionseigenschaften verändern. Auf diese Weise lassen sich ebenfalls strukturierte Schichten mit anisotropen optischen Eigenschaften herstellen.

Auch ist es möglich, positiv und negativ dichroisch gefärbte Partikel in derselben Formulierung vorzusehen respektive Partikel mit positiv und negativ dichroischen Farbstoffen respektive Fluoreszenzfarbstoffen zu färben, und daraus eine erfindungsgemässe Formulierung herzustellen. Eine anisotrope Schicht aus einer solchen Formulierung zeigt bei Betrachtung durch einen rotierenden Polarisator einen Farbwechseleffekt.

Im Falle von sichtbaren Farbstoffen ist dieser Effekt ist besonders attraktiv, wenn sich die verwendeten unterschiedlich dichroischen Farbstoffe so ergänzen, dass sich eine schwarze respektive graue Färbung ergibt, beispielsweise durch die Kombination eines roten und eines grünen Farbstoffes. Bei Betrachtung einer solchen anisotropen Schicht durch einen rotierenden Polarisator verändert dieser seine Farbe von grau zu grün zu rot.

In einer weiteren Ausführungsform ist es möglich, erfindungsgemässe Schichten herzustellen, die UV-Licht in polarisierter Art und Weise absorbieren. Dazu werden die Partikel mit einem Farbstoff, der UV-Licht absorbiert, gefärbt. Wird eine solche Schicht auf einem fluoreszierenden Substrat aufgebracht, zeigen diese Stellen unter polarisiertem UV-Licht eine polarisationsabhängige Fluoreszenzintensität durch die polarisationsabhängige UV-Absorption der Schicht. Dieses Prinzip ist für absorbierende Folien bekannt aus der WO04/009373.

Die Immobilisierung der Partikel erfolgt bevorzugterweise durch Trocknung des Dispergiermediums respektive Suspendiermediums. Es ist aber auch möglich, das Dispergiermedium zu vernetzen und/oder zu polymerisieren. Bei dieser Variante ist es möglich, die Vernetzung und Immobilisierung durch Lichtaktivierung auszulösen, was grundsätzlich durch eine Glasplatte hindurch während dem Streichvorgang passieren kann. Dadurch kann die höchstmögliche Orientierung eingefroren werden, da im Moment der Immobilisierung die Scherspannung noch immer anliegt.

Als Substrat dient bevorzugterweise Papier. Dabei hat sich Papier mit einer glatten, beispielsweise geleimten oder kalandrierten Oberfläche als vorteilhaft erwiesen, da sich damit eine bessere Ausrichtung der Partikel erzielen liess. Ebenfalls geeignet als Substrate sind alle Formen von Folien, die dank der glatten Oberfläche einen besonders hohen Grad an Orientierung der Partikel erlauben. In diesem Zusammenhang hat es sich als vorteilhaft erwiesen, orientierte Schichten auf einer Folie herzustellen und diese in einem Transferverfahren auf ein Papier zu übertragen. Auf diese Weise konnten hochorientierte Schichten auf Papier mit rauer Oberfläche erzeugt werden. Transferverfahren, die die Übertragung anisotroper Schichten erlauben, sind beispielsweise in US 2002/0160296 genannt. Transferverfahren, die rein auf Druck basieren, und geeignete Kompositionen, sind im Stand der Technik beispielsweise von Schreibmaschinenbändern und Schreibmaschinenkorrekturblättern her bekannt (beispielsweise EP0530838 A1, bekannt als 'Tipp-Ex').

Die erfindungsgemässen Formulierungen eignen sich insbesondere zur Aufwertung von anderen Sicherheitsmerkmalen, insbesondere solchen, die ebenfalls im Streichverfahren aufgebracht werden. Dazu gehören beispielsweise Streichfarben mit Effektpigmenten. Durch geeignete Oberflächenmodifizierung der erfindungsgemässen Partikel wie im Stand der Technik bekannt, ist es möglich, diese in bestehende Streichfarben einzubringen und mitzuverarbeiten. Mit geringstem Aufwand lässt sich auf diese Art eine wesentliche Aufwertung von pigmentbasierten Optically Variable Devices (OVD's) erreichen, wie sie beispielsweise aus EP 0490825A1 bekannt sind.

Die erfindungsgemässen Formulierungen sind auch von Interesse, wenn Partikel verwendet werden, die keine Färbung oder Fluoreszenz aufweisen. So können beispielsweise die doppelbrechenden Eigenschaften solcher Schichten genutzt werden. Werden beispielsweise Strukturen aus solchen Schichten auf einem isotropen, transparenten Substrat erzeugt, sind diese von blossem Auge nicht zu erkennen, treten aber hervor, wenn das Substrat zwischen gekreuzten Polarisatoren betrachtet wird.

Als weitere Möglichkeit lassen sich solche Schichten beispielsweise in segmentierter Art auf einer polarisiert absorbierenden, fluoreszierenden Folie auftragen, bevorzugterweise in solcher Art, dass die beiden Vorzugsorientierungen einen Winkel von 45° einschliessen. Wird dieses Merkmal nun mit polarisiertem UV-Licht angeregt, welches seine Polarisationsachse periodisch dreht, weisen die beschichteten und unbeschichteten Segmente eine phasenverschobene, periodisch an- und abschwellende Fluoreszenz auf.

Auch ist es denkbar, anisotrope Schichten aus ungefärbten Partikeln wie beschrieben herzustellen und diese nachträglich zu färben. Wird dabei darauf geachtet, dass der Farbstoff nicht im Überfluss vorliegt, lässt sich auch auf diese Art strukturierte polarisierte Absorption und/oder Emission erreichen.

### Beispiele

### Beispiel 1: Sichtbare Partikel

In 60 ml deionisiertem Wasser wurden 30 ml Salzsäure (37%) langsam beigegeben und die resultierende 12.3%ige Salzsäure auf 80 °C erhitzt. 2.0 g grob geschnittene Fasern aus regenerierter Cellulose von Acordis mit einem Titer von ca. 1 dtex wurden beigegeben und die Mischung bei 80 °C zugedeckt gehalten. Nach 10 Minuten waren die Faserstücke bereits weitgehend zerfallen, nach 2 h waren kaum noch Faserstücke länger als 1 mm vorhanden. Nach 3 h wurde der feine Rückstand am Vakuum heiss filtriert und mit Wasser und stark verdünnter Ammoniumhydroxid-Lösung (ca. 0.5%) gewaschen.

In 50 ml deionisiertem Wasser wurden 100 mg Pergasol Flavin 7G (Ciba, CH) bei 80 °C gelöst. Der abfiltrierte Rückstand aus mikrokristalliner Cellulose wurde mit dieser Färbelösung übergossen, 30 min bei 80 °C gehalten, danach am Vakuum abfiltriert, mit Wasser gewaschen und bei 80 °C getrocknet. Es resultierte ein leuchtend gelbes Pulver mit starker, gelber Fluoreszenz bei Beleuchtung mit ultraviolettem (UV)-Licht von 365 nm Wellenlänge.

100 mg dieser gefärbten Mikrocellulose wurden in 5 nil Wasser aufgeschlämmt, mit 5 g einer 2%igen Lösung aus Carboxymethylcellulose (CMC) (Na-CMC, Fluka, Schweiz) vermengt und gerührt, bis eine homogene Paste entstand. Diese Paste wurde mit einem Rakel (Nummer 3) im Handstrich in einem streifenförmig begrenzten Bereich auf einem nicht-aufgehellten Papier (80 g/m², landqart®, CH) vom Typ eines Sicherheitspapiers aufgebracht und bei Umgebungsbedingungen für 10 min getrocknet. Es resultierte eine von blossem Auge bei Tageslicht nicht sichtbare Beschichtung. Bei Betrachtung im UV-Licht (365 nm) liessen sich im Strich stark grün-gelb fluoreszierende Partikel erkennen von höchstens ca. 500 mm Länge, welche eine deutliche Vorzugsorientierung in Streichrichtung aufwiesen.

Das Sicherheitspapier wurde darüber hinaus in polarisiertem, periodisch seine Polarisationsrichtung ändernden UV-Licht begutachtet (Testgerät für Polarisafe®-Melierfasern, landqart®, GH). Das Gerät verfügt über einen rotierenden Polfilter vor einer UV-Fluoreszenzröhre (365 nm), und emittiert somit linear polarisiertes UV-Licht, welches seine Polarisationsrichtung periodisch ändert. Bei Betrachtung in diesem periodisch ändernden, linear polariserten UV-Licht zeigten die Partikel im Strich eine periodisch an- und abschwellende gelb-grüne Fluoreszenz. Durch die Vorzugsorientierung der Partikel zeigte der ganze Strich im Mittel eine Fluoreszenz mit periodisch an- und abschwellender Intensität.

### Beispiel 2: Homogener Strich und sichtbare Partikel

Kurzschnittfasern aus Lyocell (Lenzing, AT) mit einem Titer von 0.9 dtex und einer Schnittlänge von 4mm wurden in einer Färbelösung analog zu Beispiel 1 gefärbt. Die Fasern wurden ohne Vakuum filtriert, gewaschen und bei Raumtemperatur getrocknet. Aus 30 g Wasser und 20 g HCl (32%) wurde eine 12.8%ige Salzsäurelösung hergestellt, auf 80 °C erhitzt, und 5 g gefärbten Fasern damit übergossen. Die Mischung wurde für 2h bei 80° im Ofen gehalten, ohne Vakuum filtriert, mit Wasser und stark verdünnter Ammoniumhydroxidlösung gewaschen und bei Raumtemperatur getrocknet. Es resultierte ein stark gelbes Pulver.

300 mg dieses Pulvers wurden in 15 ml Wasser aufgeschlämmt, mit 15 g CMC (2%) versetzt und zu einer homogenen Paste verrührt. Ein wie unter Beispiel 1 ausgeführter Handstrich ergab eine im Tageslicht kaum sichtbare, ganz schwach gelblich gefärbte Beschichtung, die im UV-Licht eine starke, grün-gelbe Fluoreszenz zeigte. Von blossem Auge liessen sich mikroskopisch kleine, stark fluoreszierende Partikel in einem homogen fluoreszierenden Hintergrund ausmachen. Im periodisch drehenden polarisierten UV-Licht zeigte die Beschichtung eine periodisch an- und abschwellende Fluoreszenz, wobei die Partikel stärker hervortraten und mit derselben Periodizität an- und abschwellende Fluoreszenz zeigten.

### Beispiel 3: Homogener Strich, gelb, durch Suspension

Eine Menge aus von 300 mg der in Beispiel 2 hergestellten, gefärbten mikrokristallinen Cellulose wurde in 15 ml Wasser aufgeschlämmt und mit einem Mischer während 1 min dispergiert (Ultra-Turrax T50 Basic, IKA-Werke, Stufe 5). Die suspendierte Mischung wurde mit 15 g CMC (2%) versetzt und zu einer homogenen Paste verrührt. Ein wie unter Beispiel 1 ausgeführter Handstrich ergab eine im Tageslicht kaum sichtbare, ganz schwach gelblich gefärbte Beschichtung, die im UV-Licht eine starke, grün-gelbe Fluoreszenz zeigte. Die Beschichtung wies eine homogene Fluoreszenz auf, und von blossem Auge liessen sich keine Partikel erkennen. Im periodisch drehenden polarisierten UV-Licht zeigte die Beschichtung eine periodisch an- und abschwellende Fluoreszenz mit deutlich unterschiedlicher Intensität bei Stellung des Polfilters in bzw. senkrecht zur Streichrichtung.

### Beispiel 4: Homogener Strich, aus Lyocell CLY, blau

Aus 1.0 g Blankophor P flüssig (Ciba, Schweiz) und 100 ml Wasser wurde eine Färbelösung hergestellt und auf 80 °C erhitzt. Eine Menge von 5.0 g gemahlener Fasern aus Lyocell vom Typ CLY (0.9 dtex) (Lenzing, AT) wurde mit 40 ml Färbelösung übergossen und für 30 min bei 80 °C im Ofen gehalten. Die gefärbten Mahlfasern wurden ohne Vakuum abfiltriert und mit Wasser gewaschen. Die noch feuchten Fasern wurden mit 50 ml Salzsäure-Lösung (12.8%) übergossen und für 3 h bei 80 °C gehalten. Die erhaltene Mikrocellulose wurde ohne Vakuum abfiltriert, mit Wasser und stark verdünnter Ammoniumhydroxid-Lösung gewaschen und getrocknet.

300 mg dieses Pigmentes wurden in 15 ml Wasser aufgeschlämmt, und für 1 min mit einem Mischer während 1 min dispergiert (Ultra-Turrax T50 Basic, IKA-Werke, Stufe 5). Die Suspension wurde mit 10 g CMC (2%) versetzt und von Hand gerührt, bis eine homogen viskose Paste entstand. Diese Paste wurde analog zu Beispiel 1 im Handstrich verarbeitet und das Blatt bei 120 °C im Umluftofen für 30 sec getrocknet. Es resultierte ein Papier mit im Tageslicht vollständig unsichtbaren Beschichtung, die weder erkennbare Färbung noch Glanz aufwies und auch nicht fühlbar war. Bei Betrachtung im UV-Licht zeigte sich der Strich hell blau leuchtend. Bei Betrachtung im periodisch drehenden polarisierten UV-Licht zeigte der Strich eine periodisch an- und abschwellende Fluoreszenz mit sehr gutem Kontrastverhältnis. Einzelpartikel konnten von blossem Auge nicht erkannt oder unterschieden werden.

### Beispiel 5: Homogener Strich, aus Lyocell CLY, gelb

Eine Menge von 5.0 g gemahlener Fasern aus Lyocell vom Typ CLY (0.9 dtex) (Lenzing, AT) wurde mit 40 ml Färbelösung mit 0.2% Pergasol Flavin 7G aus Beispiel 1 übergossen und für 30 min bei 80 °C im Ofen gehalten. Die gefärbten Mahlfasern wurden ohne Vakuum abfiltriert und mit Wasser gewaschen. Die noch feuchten Fasern wurden mit 50 ml Salzsäure-Lösung (12.8%) übergossen und für 3 h bei 80 °C gehalten. Die erhaltene Mikrocellulose wurde ohne Vakuum abfiltriert, mit Wasser und stark verdünnter Ammoniumhydroxid-Lösung gewaschen und getrocknet.

Mit dem so erhaltenen Pigmente wurden analog zu Beispiel 5 eine streichfähige Paste hergestellt, und ein Papier beschichtet, getrocknet und beurteilt. Es resultierte ein Papier mit im Tageslicht kaum sichtbaren Beschichtung, die einzig eine sehr schwach wahrnehmbare, leicht gelbliche Färbung aber keinen erkennbaren Glanz aufwies und auch nicht fühlbar war. Bei Betrachtung im UV-Licht zeigte sich der Strich hell gelbgrün leuchtend. Bei Betrachtung im periodisch drehenden polarisierten UV-Licht zeigte der Strich eine periodisch an- und abschwellende Fluoreszenz mit sehr gutem Kontrastverhältnis. Einzelpartikel konnten von blossem Auge nicht erkannt oder unterschieden werden.

### Beispiel 6: Doppelstrich

Zwei Tropfen der in Beispiel 4 und 5 hergestellten streichfähigen Pasten wurden dicht nebeneinander auf ein nicht aufgehelltes Papier wie in den bisherigen Beispielen verwendet aufgebracht und mit einem Rakel (Nummer 3) im Handstrich verarbeitet. Dadurch ergab sich ein Doppelstrich aus direkt aneinander angrenzenden Einzelstrichen unterschiedlicher Fluoreszenzfarbe, welche beide im periodisch drehenden polarisierten UV-Licht eine periodisch an- und abschwellende Fluoreszenz mit sehr gutem Kontrastverhältnis zeigten. Einzelpartikel konnten von blossem Auge nicht erkannt oder unterschieden werden.

### Beispiel 7: Referenz-Strich

Eine Menge von 5 g einer kommerziell erhältlichen, aus Holz gewonnener Mikrocellulose vom Typ Avicel PH-101 (FMC Biopolymers, Hamburg, DE) wurde mit 15 g der in Beispiel 1 genannten Färbelösung übergossen, 15 min bei 80 °C gehalten, ohne Vakuum abfiltriert, mit Wasser gewaschen und bei 80 °C getrocknet. Aus dieser gefärbten Mikrocellulose wurde analog zum Beispiel 5 eine streichfähige Paste hergestellt, die einen Strich ergab, der sich in Farbton und Fluoreszenzintensität bei Betrachtung im UV-Licht in keiner Weise von dem im Beispiel 5 genannten Strich unterschied. Allerdings zeigte dieser Strich keinerlei Vorzugsorientierung und somit im periodisch drehenden polarisierten UV-Licht eine konstant bleibende Fluoreszenzintensität. Analog zu Beispiel 6 wurde mit dieser Streichpaste und der in Beispiel 5 beschriebenen Streichpaste ein Doppelstrich realisiert, der bei Betrachtung im UV-Licht nicht als solcher erkennbar war, da jeder der direkt aneinander angrenzenden Einzelstriche dieselbe Fluoreszenzfarbe und -Intensität aufwiesen. Im periodisch drehenden polarisierten UV-Licht zeigte der Strich aus der in Beispiel 5 genannten Streichfarbe aber die bekannte periodisch an- und abschwellende Fluoreszenz, während der andere Strich eine konstant bleibende Fluoreszenzintensität aufwies. Eine solche Kombination erweist sich insbesondere dann als sinnvoll, wenn sich der orientierte Strich durch eine mässig starke Orientierung und einen demzufolge schwach erkennbaren hell-dunkel-Effekt auszeichnet. Der Kontrast zum konstant fluoreszierenden Strich macht den Effekt in diesem Fall deutlicher und leichter verifizierbar.

### Beispiel 8: Partielle Überdruckung mit Fluoreszenzfarbe

Ein wie in Beispiel 5 hergestellter Strich wurde mit einer blau fluoreszierenden Sicherheitstinte überdruckt. Bei Betrachtung im UV-Licht zeigte der Strich eine gelb-grüne Fluoreszenz, auf dem Strich hob sich der blau leuchtende Druck ab. Bei Betrachtung im periodisch drehenden polarisierten UV-Licht zeigte der Strich die bekannte an- und abschwellende Fluoreszenzintensität, während die blau leuchtende Schrift keine Änderung in der Intensität zeigte. Dieser Effekt erwies sich als visuell besonders attraktiv.

### Beispiel 9: Partielle Überdruckung mit UV-Absorber

Ein wie in Beispiel 5 hergestellter Strich wurde mit einer Tinte, welche einen UV-Absorber enthält, überdruckt (Tinuvin 327, Ciba, CH). Bei Betrachtung im UV-Licht zeigte der Strich eine gelb-grüne Fluoreszenz, die Stellen, die mit dem UV-Absorber überdruck wurden, erschienen dagegen dunkel, da in diesen Regionen das UV-Licht grösstenteils absorbiert und abgeblockt wurde. Bei Betrachtung im periodisch drehenden polarisierten UV-Licht zeigte der Strich die bekannte an- und abschwellende Fluoreszenzintensität, während die dunkle Schrift leuchtende Schrift immer dunkel blieb. Diese Ausführungsform ist insbesondere dann interessant, wenn der UVabsorbierende Druck als Negativdruck ausgeführt wird, wodurch sich eine im periodisch drehenden polarisierten UV-Licht eine periodisch an- und abschwellende, fluoreszente, positive Schrift zeigt.

### Beispiel 10: Pol UV Absorption

Aus 200 mg Chrysophenin (Aldrich Chemical Company, Milwaukee, WI, USA) und 200 ml deionisiertem Wasser wurde eine Färbelösung hergestellt. Eine Menge von 5 g Lyocell Mahlfaser vom Typ CLY (0.9 dtex, Lenzing, AT) wurde mit 50 ml dieser Färbelösung übergossen und während 30 min bei 80 °C im Ofen gehalten, filtriert, und mit Wasser und bei Raumtemperatur getrocknet. Die gelben Fasern wurden mit 12.8%iger Salzsäure übergossen, worauf sie sich die Färbung von gelb nach dunkelbraun veränderte, und während 3 h bei 80 °C im Ofen hydrolysiert. Danach wurde der braune Rückstand abfiltriert und zunächst mit Wasser und dann mit stark verdünnter Ammoniumhydroxid-Lösung gewaschen, woraufhin sich die ursprüngliche, gelbe Färbung wieder einstellte. Der Rückstand wurde noch feucht zusammen mit einer Lösung aus CMC (2%) zu einer streichfähigen Paste verrührt. Diese Paste wurde im Handstrich mit einem Rakel (Nr. 5) auf ein weisses, aufgehelltes Papier aufgebracht und bei 120 °C für 1 min im Umluftofen getrocknet. Bei Betrachtung im periodisch drehenden polarisierten UV-Licht zeigte das aufgehellte Papier eine konstante, blaue Fluoreszenz, von der sich der Strich dunkel abhob. Der dunkel erscheinende Strich zeigte einen erkennbaren, periodisch wechselnden Kontrast zum aufgehellten Papier.

### Beispiel 11: Vis

Aus 100 mg Congo Red (Aldrich Chemical Company, Milwaukee, WI, USA) und 200 ml deionisiertem Wasser wurde eine Färbelösung hergestellt. Eine Menge von 3 g Lyocell Mahlfaser vom Typ CLY (0.9 dtex, Lenzing, AT) wurde mit 20 ml dieser Färbelösung übergossen und während 30 min bei 80 °C im Ofen gehalten, filtriert, mit Wasser gewaschen und bei Raumtemperatur getrocknet. Die roten Fasern wurden mit 12.8%iger Salzsäure übergossen, worauf sie sich die Färbung von rot nach blau veränderte, und während 3 h bei 80 °C im Ofen hydrolysiert. Danach wurde der blaue Rückstand abfiltriert und zunächst mit Wasser und dann mit stark verdünnter Ammoniumhydroxid-Lösung gewaschen, woraufhin sich die ursprüngliche, rote Färbung wieder einstellte. Der Rückstand wurde noch feucht zusammen mit einer Lösung aus CMC (2%) zu einer streichfähigen Paste verrührt. Diese Paste wurde im Handstrich mit einem Rakel (Nr. 5) auf ein weisses, aufgehelltes Papier aufgebracht und bei 120 °C für 1 min im Umluftofen getrocknet. Bei Betrachtung durch einen rotierenden Polfilter zeigte der Strich bei Stellung der Polfilterachse parallel zur Streichrichtung eine helle, bei Stellung der Polfilterachse senkrecht zur Streichrichtung eine dunklere, rote Färbung.

### Beispiel 12: Transfer

Die in Beispiel 5 hergestellte Paste wurde mittels Rakel (Nummer 3) auf eine Folie aus Cellophan vollflächig aufgestrichen und diese bei Raumtemperatur getrocknet. Bei Betrachtung der Folie im periodisch drehenden polarisierten UV-Licht gegen einen schwarzen Hintergrund zeigte der Strich eine periodisch an- und abschwellende Fluoreszenz mit einem sehr guten Kontrastverhältnis, welches deutlich besser war, als bei Verwendung von Papier als Trägermaterial. Ein Sicherheitspapier wie in Beispiel 5 verwendet wurde unter fliessendem Wasser kurz angefeuchtet und mit einem Baumwolltuch trockengetupft. Die beschichtete Cellophan-Folie wurde mit der beschichteten Seite mit dem feuchten Papier in Kontakt gebracht. Verschiedene Gegenstände wurden für einige Sekunden auf die Folie gepresst. Die Gegenstände und die Folie wurden sorgfältig entfernt und das Papier bei 120 °C im Umluftofen während 1 min getrocknet. Unter UV-Licht zeigte sich, dass die Beschichtung in Bereichen, wo Druck vorherrschte, von der Folie auf das Papier übertragen wurde, und die Konturen der Gegenstände dadurch abgedruckt wurden. Unter Betrachtung im periodisch drehenden polarisierten UV-Licht zeigten diese Stellen eine periodisch an- und abschwellende Fluoreszenz mit sehr gutem Kontrastverhältnis.

### BEZUGSZEICHENLISTE

- 10: Applizierbare Formulierung ('Streichfarbe')
- 11: Applizierbare Formulierung, vernetz- oder polymerisierbar
- 20: Anisotrope Partikel
- 21: Matrix
- 30: Substrat
- 40: Stab
- 41: Balken
- 42: Klinge ('Blade')
- 43: Rakel
- 44: Gegendrehendes Rakel
- 45: Auftragswalze
- 50: Schlitzdüse
- 60: Auftragswalze
- 61: Rakel
- 62: Gegenwalze
- 70: Beflockungsgerät
- 80: Transparente Platte
- 81: Lampe
- 90: Dreiwalzenwerk
- 91: Leimpresse

## Patentansprüche

1. Verfahren zur Herstellung eines optischen Elementes mit linear polarisierter Emission und/oder linear polarisierter Absorption, wobei das optische Element **dadurch gekennzeichnet ist, dass**
es in eine Matrix (21) eingebettete Partikel (20) aufweist, wobei die Partikel (20) formanisotrop sind,
wobei die Partikel (20) eine mittlere Formanisotropie, definiert als Länge der Hauptachse dividiert durch den Mittelwert der beiden kürzeren Hauptachsen, von mehr als 1.5 aufweisen,
wobei die Partikel in der Richtung ihrer langen Hauptachse eine mittlere Länge im Bereich von 50 nm bis 500 µm aufweisen und
wobei die Partikel (20) in der Matrix (21) wenigstens bereichsweise derart im Wesentlichen uniaxial orientiert sind, dass makroskopisch erkennbare linear polarisierte Emission respektive linear polarisierte Absorption des optischen Elementes auftritt
bei welchem Verfahren die Partikel (20) in Form einer Suspension respektive Aufschlämmung auf ein Substrat derart aufgebracht werden, dass im Auftragungsprozess auftretende Scherkräfte zu einer bevorzugten Ausrichtung der Partikel (20) führen und diese bevorzugte Ausrichtung in einem anschliessenden Trocknungsprozess und/oder Vernetzungsprozess und/oder Polymerisationsprozess der Matrix (21) im optischen Element bleibend stabilisiert wird.

2. Verfahren zur Herstellung eines optischen Elements nach Anspruch 1, **dadurch gekennzeichnet, dass** die Partikel (20) linear polarisierte Emission und/oder linear polarisierte Absorption zeigen.

3. Verfahren zur Herstellung eines optischen Elements nach einem der vorhergehenden Ansprüche, **dadurch gekennzeichnet, dass** die Partikel (20) optisch aktive, insbesondere farbgebende Spezies in uniaxial orientierter Form enthalten, wobei es sich bei den Spezies insbesondere bevorzugt um dichroische Farbstoffe handelt.

4. Verfahren zur Herstellung eines optischen Elements nach Anspruch 3, **dadurch gekennzeichnet, dass** es sich bei den Spezies zur Färbung der Partikel (20) um wenigstens einen fotolumineszierenden Farbstoff handelt.

5. Verfahren zur Herstellung eines optischen Elements nach einem der vorhergehenden Ansprüche, **dadurch gekennzeichnet, dass** es fotolumineszierend ist.

6. Verfahren zur Herstellung eines optischen Elements nach Anspruch 5, **dadurch gekennzeichnet, dass** das optische Element durch Bestrahlung mit elektromagnetischer Strahlung einer Wellenlänge zwischen 200 und 400 nm zur Lumineszenz angeregt werden kann.

7. Verfahren zur Herstellung eines optischen Elements nach einem der vorhergehenden Ansprüche, **dadurch gekennzeichnet, dass** die Partikel (20) durchschnittlich ein dichroisches Verhältnis in Absorption und/oder Emission von mehr als 2, bevorzugt von mehr als 5, insbesondere bevorzugt von mehr als 10 aufweisen.

8. Verfahren zur Herstellung eines optischen Elements nach einem der vorhergehenden Ansprüche, **dadurch gekennzeichnet, dass** es ein dichroisches Verhältnis in Absorption und/oder Emission von mehr als 2, bevorzugt von mehr als 5, insbesondere bevorzugt von mehr als 10 aufweist.

9. Verfahren zur Herstellung eines optischen Elements nach einem der vorhergehenden Ansprüche, **dadurch gekennzeichnet, dass** die Partikel (20) eine mittlere Formanisotropie > 2 aufweisen.

10. Verfahren zur Herstellung eines optischen Elements nach einem der vorhergehenden Ansprüche, **dadurch gekennzeichnet, dass**. die Partikel (20) eine mittlere Formanisotropie > 5 aufweisen

11. Verfahren zur Herstellung eines optischen Elements nach einem der vorhergehenden Ansprüche, **dadurch gekennzeichnet, dass** die formanisotropen Partikel (20) in der Richtung ihrer langen Hauptachse eine mittlere Länge im Bereich von 100 nm bis 100 µm, bevorzugt im Bereich von 150 nm bis 500 nm aufweisen.

12. Verfahren zur Herstellung eines optischen Elements nach einem der vorhergehenden Ansprüche, **dadurch gekennzeichnet, dass** die Hauptachse der optischen Anisotropie der Partikel (20) im Wesentlichen parallel zur langen Hauptachse der Formanisotropie oder senkrecht zu dieser angeordnet ist.

13. Verfahren zur Herstellung eines optischen Elements nach einem der vorhergehenden Ansprüche, **dadurch gekennzeichnet, dass** die Partikel (20) aus synthetischem Material wie Polyethylen, Polypropylen, Aramid, Polyamid, Polyacrylat, Polyacrylonitril, Poly(vinylalkohol), Poly(vinylacetat), Poly(ethylenterephthalat), Poly(stryrol), Poly(tetrafluorethylen) oder Derivate, Copolymere resp. Mischungen davon bestehen, oder auf natürlichem Rohmaterial beruhen auf Basis von Holz, insbesondere Cellulose aus beispielsweise Holz, insbesondere Nadelholz, Reisstroh, Baumwolle, Gras, Flachs, Hanf, Bast, Leinen, Jute, Zuckerrüben, aber auch aus Bakterien wie Acetobacter xylinum, Algen wie Valonia und Seelebewesen wie Tunicae; oder auf Materialien beruhen aus regenerierter Cellulose wie Rayon, Cellophan, Viskose, Lyocell; oder auf Materialen beruhen wie Derivate von Cellulose wie Celluloseacetate oder Cellulosebutyrate; oder auf Materialien beruhen wie Chitin, Polysacchariden wie β 1→3 Glucan, β 1→3 Xylan und β 1→4 Mannan; oder auf Kristalliten beruhen wie Böhmit, Vanadium Pentoxid, FeOOH, welche mit geeigneten Farbstoffen gefärbt werden können, oder auf Kristalliten von Einschlussverbindungen geeigneter Farbstoffe mit Harnstoff, Thioharnstoff, Cyclodextrinen, Ceolithen und Schichtmineralien.

14. Verfahren zur Herstellung eines optischen Elements nach einem der vorhergehenden Ansprüche, **dadurch gekennzeichnet, dass** die Partikel (20) aus mikrokristalliner Cellulose bestehen, insbesondere aus regenerierter, gereckter Cellulose wie Lyocell, wobei diese mikrokristalline Cellulose insbesondere bevorzugt im wesentlichen frei ist von amorphen Bestandteilen.

15. Verfahren zur Herstellung eines optischen Elements nach Anspruch 14, **dadurch gekennzeichnet, dass** die mikrokristalline Cellulose modifiziert, insbesondere bevorzugt oberflächenmodifiziert, und damit in organischen Lösungsmitteln löslich ist, wobei diese Modifikation insbesondere durch Einführung von bipolaren Elementen hervorgerufen wird.

16. Verfahren zur Herstellung eines optischen Elements nach Anspruch 14 oder 15, **dadurch gekennzeichnet, dass** die mikrokristalline Cellulose mit einem dichroischen fotolumineszierenden Farbstoff eingefärbt ist.

17. Verfahren zur Herstellung eines optischen Elements nach einem der Ansprüche 14-16, **dadurch gekennzeichnet, dass** die Partikel (20) mit hydrophoben Spezies eingefärbt sind.

18. Verfahren zur Herstellung eines optischen Elements nach einem der vorhergehenden Ansprüche, **dadurch gekennzeichnet, dass** die Matrix (21) auf Basis von makromolekularen Substanzen wie Carboxymethylcellulose, Hydroxyethylcellulose, Acrylaten, Acetaten, Gelatine, Stärke, Poly(vinylalkohol) und Poly(vinylamin) oder Mischungen davon, in getrockneter und/oder zusätzlich vernetzter Form, beruht.

19. Verfahren zur Herstellung eines optischen Elements nach einem der vorhergehenden Ansprüche, **dadurch gekennzeichnet, dass** die Matrix zusätzlich weitere optische Elemente wie nicht-polarisierende Partikel, Melierfasern, Planchetten, irisierende Pigmente, Metallpigmente, thermochrome oder photochrome Pigmente oder Farbstoffe, Up-Converter, Taggants und/oder magnetische Elemente und/oder elektrisch leitfähige Elemente enthält.

20. Verfahren zur Herstellung eines optischen Elements nach einem der vorhergehenden Ansprüche in Form einer Beschichtung auf einem Substrat (30), wobei es sich beim Substrat insbesondere bevorzugt um Papier, Sicherheitspapier, Kunststofffolien, insbesondere Polyesterfolien oder Polyamidfolien, oder Kombinationen davon handelt.

21. Verfahren zur Herstellung eines optischen Elements nach Anspruch 20, **dadurch gekennzeichnet, dass** es sich bei der Beschichtung um einen Strich handelt.

22. Verfahren zur Herstellung eines optischen Elements nach Anspruch 20, **dadurch gekennzeichnet, dass** es sich bei der Beschichtung um eine Leimung handelt.

23. Verfahren zur Herstellung eines optischen Elements nach einem der vorhergehenden Ansprüche, **dadurch gekennzeichnet, dass** das optische Element Teil eines Sicherheitsartikels ist.

24. Verfahren nach Anspruch 23, **dadurch gekennzeichnet, dass** Bereiche, insbesondere bevorzugt aneinander grenzende Bereiche vorhanden sind, in welchen optische Elemente angeordnet sind, welche sich in wenigstens einer oder einer Kombination der folgenden Eigenschaften unterscheiden: Polarisationsrichtung, Polarisationsintensität, (Fluoreszenz-)Farbe, (Fluoreszenz-)Farbintensität, Partikeldichte, Nachleuchtdauer, Partikeldimensionen, Partikelart, Anregungswellenlänge.

25. Verfahren nach Anspruch 24, **dadurch gekennzeichnet, dass** die Bereiche als aneinander grenzende gestrichene Streifen angeordnet sind.

26. Verfahren nach einem der Ansprüche 23 bis 25, der Sicherheitsartikel in Form von Banknoten, Checks, Aktien, Obligationen, Ausweise, Pässe, Führerausweise, Eintrittskarten, Briefmarken, Bankkarten, Kreditkarten, Trägermaterial, Aufreissfäden, Beipackzettel, Zertifikate, Verpackungsmaterial, (Tax-)Marken, Gebührenmarken, Visumsetiketten, Aufreissfäden, Zigarettenpapier ausgebildet ist.

27. Verfahren zu Herstellung eines optischen Elements nach einem der Ansprüche 1-22 auf einem Trägermaterial, bei welchem das optische Element als Beschichtung derart auf einem Träger angeordnet ist, dass es unter Anwendung von Wärme und/oder Druck auf einem Substrat aufgebracht werden kann.

28. Verfahren zur Herstellung eines optischen Elementes nach einem der vorhergehenden Ansprüche, bei welchem die Partikel (20) in Form einer wässrigen Suspension respektive Aufschlämmung auf ein Substrat derart aufgebracht werden, dass im Auftragungsprozess auftretende Scherkräfte zu einer bevorzugten Ausrichtung der Partikel (20) führen und diese bevorzugte Ausrichtung in einem anschliessenden Trocknungsprozess und/oder Vernetzungsprozess und/oder Polymerisationsprozess der Matrix (21) im optischen Element bleibend stabilisiert wird.

29. Verfahren nach einem der vorhergehenden Ansprüche, **dadurch gekennzeichnet, dass** es sich beim Auftragungsprozess um einen Streichprozess handelt, insbesondere bevorzugt unter Verwendung eines Rakels (43), eines gegendrehenden Rakels (44), eines Stabes (40), einer Klinge (42), einer Schlitzdüse (50), einer Transferwalze, eines Dreiwalzenwerks oder eines Balkens (41), ggf. in Kombination mit einer elektrostatischen und/oder magnetischen Unterstützung (70).

30. Verfahren nach einem der vorhergehenden Ansprüche, **dadurch gekennzeichnet, dass** es sich beim Auftragungsprozess um eine Leimung, oder ein Druckverfahren wie z. B. Tampondruck oder Siebdruck handelt.

31. Verfahren nach einem der vorhergehenden Ansprüche, **dadurch gekennzeichnet, dass** die Partikel (20) durch Hydrolyse von Cellulose hergestellt werden, wobei insbesondere bevorzugt die Partikel vor, und/oder während, und/oder nach der Hydrolyse mit bevorzugt lumineszierenden Farbstoffen eingefärbt werden.

32. Verfahren nach einem der vorhergehenden Ansprüche, **dadurch gekennzeichnet, dass** die Partikel (20) durch Mahlen von insbesondere bevorzugt faserförmiger Cellulose wie Lyocell hergestellt werden, wobei entweder die faserförmige Cellulose und/oder die gemahlenen Partikel (20) mit bevorzugt lumineszierenden Farbstoffen eingefärbt werden.

33. Verfahren nach einem der vorhergehenden Ansprüche, **dadurch gekennzeichnet, dass** das optische Element nach dessen Herstellung nachbehandelt wird, wobei entweder bereits vorhandene linear polarisierte Emission respektive linear polarisierte Absorption bereichsweise durch chemische Behandlung wieder rückgängig gemacht wird, oder noch nicht vorhandene, latente linear polarisierte Emission respektive linear polarisierte Absorption durch chemische Behandlung bereichsweise aktiviert wird, wobei es sich bei der chemische Behandlung insbesondere bevorzugt um pH Modifikationen, oder Änderungen im Redoxpotenzial, Komplexierung mit Metallen oder fotochemische Behandlung handeln kann.

## Claims

1. Method of manufacturing an optical element with linearly polarized emission and/or linearly polarized absorption, the optical element being
**characterised in that**
it comprises particles (20) embedded in a matrix (21), said particles (20) being formanisotropic,
wherein the particles (20) have an average shape anisotropy, defined as the length of the major axis divided by the average of the two shorter major axes, of more than 1.5,
the particles having an average length in the direction of their long major axis in the range from 50 nm to 500 m, and
wherein the particles (20) in the matrix (21) are oriented substantially uniaxially at least in regions in such a way that macroscopically detectable linearly polarized emission or linearly polarized absorption of the optical element occurs, respectively
in which process the particles (20) are applied in the form of a suspension or slurry to a substrate in such a way that shear forces occurring in the application process lead to a preferred orientation of the particles (20) and this preferred orientation is permanently stabilized in the optical element in a subsequent drying process and/or crosslinking process and/or polymerization process of the matrix (21).

2. A method for producing an optical element according to claim 1, **characterized in that** the particles (20) exhibit linearly polarized emission and/or linearly polarized absorption.

3. Process for producing an optical element according to one of the preceding claims, **characterized in that** the particles (20) contain optically active, in particular coloring species in uniaxially oriented form, the species being in particular preferably dichroic dyes.

4. Process for the production of an optical element according to claim 3, **characterized in that** the species for colouring the particles (20) are at least one photoluminescent dye.

5. Process for producing an optical element according to one of the preceding claims, **characterized in that** it is photoluminescent.

6. Process for the production of an optical element according to claim 5, **characterized in that** the optical element can be excited to luminescence by irradiation with electromagnetic radiation of a wavelength between 200 and 400 nm.

7. Process for manufacturing an optical element according to one of the preceding claims, **characterized in that** the particles (20) have on average a dichroic ratio in absorption and/or emission of more than 2, preferably of more than 5, more preferably of more than 10.

8. Process for manufacturing an optical element according to one of the preceding claims, **characterized in that** it has a dichroic ratio in absorption and/or emission of more than 2, preferably of more than 5, preferably of more than 10.

9. Process for manufacturing an optical element according to one of the preceding claims, **characterized in that** the particles (20) have an average shape anisotropy > 2.

10. Method for manufacturing an optical element according to one of the preceding claims, **characterized in that** the particles (20) have an average shape anisotropy > 5.

11. Process for the manufacture of an optical element according to one of the preceding claims, **characterized in that** the formanisotropic particles (20) have, in the direction of their long main axis, an average length in the range from 100 nm to 100 m, preferably in the range from 150 nm to 500 nm.

12. Process for manufacturing an optical element according to one of the preceding claims, **characterized in that** the major axis of the optical anisotropy of the particles (20) is arranged substantially parallel to or perpendicular to the long major axis of the form anisotropy.

13. Process for the production of an optical element according to one of the preceding claims, **characterized in that** the particles (20) consist of synthetic material such as polyethylene, polypropylene, aramide, polyamide, polyacrylate, polyacrylonitrile, poly(vinyl alcohol), poly(vinyl acetate), poly(ethylene terephthalate), poly(stryrol), poly(tetrafluoroethylene) or derivatives, copolymers or mixtures thereof, or are based on natural raw material, in particular cellulose from e.g. wood, wood, wood, or on natural raw materials. Mixtures thereof, or based on natural raw material are based on wood, in particular cellulose from wood, in particular softwood, rice straw, cotton, grass, flax, hemp, bast, linen, jute, sugar beets, but also from bacteria such as Acetobacter xylinum, algae such as Valonia and sea creatures such as Tunicae; or based on materials from regenerated cellulose such as rayon, cellophane, viscose, Lyocell; or based on materials such as derivatives of cellulose such as cellulose acetates or cellulose butyrates; or based on materials such as chitin, polysaccharides such as 13 glucan, 13 xylan and 14 mannan; or based on crystallites such as boehmite, vanadium pentoxide, FeOOH which can be stained with suitable dyes, or based on crystallites of inclusion compounds of suitable dyes with urea, thiourea, cyclodextrins, ceolites and layer minerals.

14. Process for producing an optical element according to one of the preceding claims, **characterized in that** the particles (20) consist of microcrystalline cellulose, in particular regenerated, stretched cellulose such as lyocell, said microcrystalline cellulose being in particular preferably substantially free of amorphous constituents.

15. Process for producing an optical element according to claim 14, **characterized in that** the microcrystalline cellulose is modified, in particular preferably surface-modified, and thus soluble in organic solvents, this modification being caused in particular by the introduction of bipolar elements.

16. Process for producing an optical element according to claim 14 or 15, **characterized in that** the microcrystalline cellulose is dyed with a dichroic photoluminescent dye.

17. Aa process for producing an optical element according to any one of claims 14-16, **characterized in that** the particles (20) are colored with hydrophobic species.

18. Process for the production of an optical element according to one of the preceding claims, **characterized in that** the matrix (21) is based on macromolecular substances such as carboxymethylcellulose, hydroxyethylcellulose, acrylates, acetates, gelatin, starch, poly(vinyl alcohol) and poly(vinylamine) or mixtures thereof, in dried and/or additionally crosslinked form.

19. Process for the production of an optical element according to one of the preceding claims, **characterized in that** the matrix additionally contains further optical elements such as non-polarizing particles, mica fibers, planchettes, iridescent pigments, metal pigments, thermochromic or photochromic pigments or dyes, up-converters, taggants and/or magnetic elements and/or electrically conductive elements.

20. Process for the production of an optical element according to one of the preceding claims in the form of a coating on a substrate (30), wherein the substrate is in particular preferably paper, security paper, plastic films, in particular polyester films or polyamide films, or combinations thereof.

21. Pprocess for the production of an optical element according to claim 20, **characterized in that** the coating is a coating.

22. Process for the production of an optical element according to claim 20, **characterized in that** the coating is a sizing.

23. Method for manufacturing an optical element according to one of the preceding claims, **characterized in that** the optical element is part of a security article.

24. Method according to claim 23, **characterized in that** there are regions, in particular preferably adjacent regions, in which optical elements are arranged which differ in at least one or a combination of the following properties: polarization direction, polarization intensity, (fluorescent) color, (fluorescent) color intensity, particle density, afterglow duration, particle dimensions, particle type, excitation wavelength.

25. A method according to claim 24, **characterized in that** the regions are arranged as contiguous dashed stripes.

26. Method according to one of claims 23 to 25, which security article is in the form of banknotes, cheques, stocks, bonds, identity cards, passports, driver's licences, admission tickets, stamps, bank cards, credit cards, carrier material, tear-open threads, package inserts, certificates, packaging material, (tax) stamps, fee stamps, visa labels, tear-open threads, cigarette paper.

27. Process for producing an optical element according to one of the claims 1-22 on a carrier material, in which the optical element is arranged as a coating on a carrier in such a way that it can be applied to a substrate using heat and/or pressure.

28. Process for producing an optical element according to one of the preceding claims, in which the particles (20) are applied in the form of an aqueous suspension or slurry to a substrate in such a way that shear forces occurring in the application process lead to a preferred orientation of the particles (20) and this preferred orientation is permanently stabilised in the optical element in a subsequent drying process and/or crosslinking process and/or polymerisation process of the matrix (21).

29. Method according to one of the preceding claims, **characterized in that** the application process is a coating process, in particular preferably using a doctor blade (43), a counter-rotating doctor blade (44), a rod (40), a blade (42), a slot nozzle (50), a transfer roll, a three-roll mechanism or a beam (41), optionally in combination with an electrostatic and/or magnetic support (70).

30. Method according to one of the preceding claims, **characterized in that** the application process is a sizing, or a printing process such as pad printing or screen printing.

31. Process according to one of the preceding claims, **characterized in that** the particles (20) are produced by hydrolysis of cellulose, in particular preferably the particles being dyed with preferably luminescent dyes before, and/or during, and/or after the hydrolysis.

32. Process according to one of the preceding claims, **characterized in that** the particles (20) are produced by grinding in particular preferably fibrous cellulose such as lyocell, either the fibrous cellulose and/or the ground particles (20) being dyed with preferably luminescent dyes.

33. Process according to one of the preceding claims, **characterised in that** the optical element is aftertreated after its manufacture, wherein either already present linearly polarised emission or linearly polarised absorption, respectively, is reversed in regions by chemical treatment, or not yet present latent linearly polarised emission or linearly polarised absorption, respectively, is activated in regions by chemical treatment, wherein the chemical treatment can in particular preferably be pH modifications, or changes in the redox potential, complexation with metals or photochemical treatment.

## Revendications

1. Procédé de fabrication d'un élément optique à émission polarisée linéairement et/ou à absorption polarisée linéairement, l'élément optique
étant **caractérisé en ce que**
il comprend des particules (20) incorporées dans une matrice (21), les particules (20) étant à anisotropie de forme,
les particules (20) présentant une anisotropie de forme moyenne, définie comme la longueur de l'axe principal divisée par la valeur moyenne des deux axes principaux plus courts, de plus de 1,5,
les particules présentant dans la direction de leur axe principal long une longueur moyenne dans la plage allant de 50 nm à 500 µm, et
les particules (20) étant orientées essentiellement uniaxialement au moins en zones dans la matrice (21), de telle sorte qu'une émission polarisée linéairement ou une absorption polarisée linéairement identifiable macroscopiquement de l'élément optique se produise,
selon lequel les particules (20) sont appliquées sur un substrat sous la forme d'une suspension ou d'une dispersion, de telle sorte que les forces de cisaillement qui se produisent pendant le procédé d'application conduisent à une orientation préférée des particules (20), et cette orientation préférée est stabilisée dans l'élément optique lors d'un procédé de séchage et/ou d'un procédé de réticulation et/ou d'un procédé de polymérisation ultérieur de la matrice (21).

2. Procédé de fabrication d'un élément optique selon la revendication 1, **caractérisé en ce que** les particules (20) présentent une émission polarisée linéairement et/ou une absorption polarisée linéairement.

3. Procédé de fabrication d'un élément optique selon l'une quelconque des revendications précédentes, **caractérisé en ce que** les particules (20) contiennent des espèces optiquement actives, notamment colorantes, sous forme orientée uniaxialement, les espèces consistant de manière particulièrement préférée en des colorants dichroïques.

4. Procédé de fabrication d'un élément optique selon la revendication 3, **caractérisé en ce que** les espèces pour la coloration des particules (20) consistent en au moins un colorant photoluminescent.

5. Procédé de fabrication d'un élément optique selon l'une quelconque des revendications précédentes, **caractérisé en ce qu'**il est photoluminescent.

6. Procédé de fabrication d'un élément optique selon la revendication 5, **caractérisé en ce que** l'élément optique peut être excité pour la luminescence par exposition à un rayonnement électromagnétique d'une longueur d'onde comprise entre 200 et 400 nm.

7. Procédé de fabrication d'un élément optique selon l'une quelconque des revendications précédentes, **caractérisé en ce que** les particules (20) présentent en moyenne un rapport dichroïque en absorption et/ou émission de plus de 2, de préférence de plus de 5, de manière particulièrement préférée de plus de 10.

8. Procédé de fabrication d'un élément optique selon l'une quelconque des revendications précédentes, **caractérisé en ce qu'**il présente un rapport dichroïque en absorption et/ou émission de plus de 2, de préférence de plus de 5, de manière particulièrement préférée de plus de 10.

9. Procédé de fabrication d'un élément optique selon l'une quelconque des revendications précédentes, **caractérisé en ce que** les particules (20) présentent une anisotropie de forme moyenne > 2.

10. Procédé de fabrication d'un élément optique selon l'une quelconque des revendications précédentes, **caractérisé en ce que** les particules (20) présentent une anisotropie de forme moyenne > 5.

11. Procédé de fabrication d'un élément optique selon l'une quelconque des revendications précédentes, **caractérisé en ce que** les particules à anisotropie de forme (20) présentent dans la direction de leur axe principal long une longueur moyenne dans la plage allant de 100 nm à 100 µm, de préférence dans la plage allant de 150 nm à 500 nm.

12. Procédé de fabrication d'un élément optique selon l'une quelconque des revendications précédentes, **caractérisé en ce que** l'axe principal de l'anisotropie optique des particules (20) est agencé essentiellement en parallèle de l'axe principal long de l'anisotropie de forme ou perpendiculairement à celui-ci.

13. Procédé de fabrication d'un élément optique selon l'une quelconque des revendications précédentes, **caractérisé en ce que** les particules (20) sont constituées par un matériau synthétique tel que le polyéthylène, le polypropylène, l'aramide, le polyamide, le polyacrylate, le polyacrylonitrile, l'alcool polyvinylique, le poly(acétate de vinyle), le poly(éthylène-téréphthalate), le poly(styrène), le poly(tétrafluoroéthylène) ou leurs dérivés, leurs copolymères ou leurs mélanges, ou sont à base d'une matière première naturelle à base de bois, notamment de cellulose par exemple issue de bois, notamment de bois de conifères, de paille de riz, de coton, d'herbe, de lin, de chanvre, de filasse, de filasse de lin, de jute, de betteraves à sucre, mais également de bactéries telles qu'Acetobacter xylinum, d'algues telles que Valonia et d'organismes marins tels que Tunicae ; ou sont à base de matériaux à base de cellulose régénérée telle que la rayonne, le cellophane, la viscose, le Lyocell ; ou sont à base de matériaux tels que des dérivés de cellulose tels que les acétates de cellulose ou les butyrates de cellulose ; ou sont à base de matériaux tels que la chitine, les polysaccharides tels que le β 1→3 glucane, le β 1→3 xylane et le β 1→4 mannane ; ou sont à base de cristallites tels que la boehmite, le pentoxyde de vanadium, FeOOH, qui peuvent être colorés avec des colorants appropriés, ou de critallites de composés d'inclusion de colorants appropriés avec de l'urée, de la thiourée, des cyclodextrines, des céolithes et des minéraux en couches.

14. Procédé de fabrication d'un élément optique selon l'une quelconque des revendications précédentes, **caractérisé en ce que** les particules (20) sont constituées par de la cellulose microcristalline, notamment de la cellulose étirée régénérée telle que le Lyocell, cette cellulose microcristalline étant de manière particulièrement préférée essentiellement exempte de constituants amorphes.

15. Procédé de fabrication d'un élément optique selon la revendication 14, **caractérisé en ce que** la cellulose microcristalline est modifiée, de manière particulièrement préférée modifiée en surface, et est par conséquent soluble dans les solvants organiques, cette modification étant notamment provoquée par insertion d'éléments bipolaires.

16. Procédé de fabrication d'un élément optique selon la revendication 14 ou 15, **caractérisé en ce que** la cellulose microcristalline est colorée avec un colorant photoluminescent dichroïque.

17. Procédé de fabrication d'un élément optique selon l'une quelconque des revendications 14 à 16, **caractérisé en ce que** les particules (20) sont colorées avec des espèces hydrophobes.

18. Procédé de fabrication d'un élément optique selon l'une quelconque des revendications précédentes, **caractérisé en ce que** la matrice (21) est à base de substances macromoléculaires telles que la carboxyméthylcellulose, l'hydroxyéthylcellulose, les acrylates, les acétates, la gélatine, l'amidon, l'alcool polyvinylique et la poly(vinylamine) ou leurs mélanges, sous forme séchée et/ou en outre réticulée.

19. Procédé de fabrication d'un élément optique selon l'une quelconque des revendications précédentes, **caractérisé en ce que** la matrice contient en outre d'autres éléments optiques tels que des particules non polarisantes, des fibres colorées, des planchettes, des pigments irisés, des pigments métalliques, des pigments ou colorants thermochromes ou photochromes, des convertisseurs ascendants, des marqueurs et/ou des éléments magnétiques et/ou des éléments électriquement conducteurs.

20. Procédé de fabrication d'un élément optique selon l'une quelconque des revendications précédentes sous la forme d'un revêtement sur un substrat (30), le substrat consistant de manière particulièrement préférée en du papier, du papier de sécurité, des films en matière plastique, notamment des films en polyester ou des films en polyamide, ou des combinaisons de ceux-ci.

21. Procédé de fabrication d'un élément optique selon la revendication 20, **caractérisé en ce que** le revêtement consiste en une enduction.

22. Procédé de fabrication d'un élément optique selon la revendication 20, **caractérisé en ce que** le revêtement consiste en un encollage.

23. Procédé de fabrication d'un élément optique selon l'une quelconque des revendications précédentes, **caractérisé en ce que** l'élément optique fait partie d'un article de sécurité.

24. Procédé selon la revendication 23, **caractérisé en ce que** des zones, de manière particulièrement préférée des zones adjacentes les unes aux autres, sont présentes, dans lesquelles des éléments optiques sont agencés, qui diffèrent au niveau d'au moins une ou d'une combinaison des propriétés suivantes : la direction de polarisation, l'intensité de polarisation, le couleur (de fluorescence), l'intensité de la couleur (de fluorescence), la densité de particules, la durée de luminescence, les dimensions des particules, le type de particule, la longueur d'onde d'excitation.

25. Procédé selon la revendication 24, **caractérisé en ce que** les zones sont agencées sous la forme de bandes enduites adjacentes les unes aux autres.

26. Procédé selon l'une quelconque des revendications 23 à 25, l'article de sécurité étant configuré sous la forme de billets de banque, de chèques, d'actions, d'obligations, de titres, de passes, de permis de conduire, de cartes d'entrée, de timbres postaux, de cartes bancaires, de cartes de crédit, de matériaux support, de bandelettes d'arrachage, de notices d'utilisation, de certificats, de matériaux d'emballage, de timbres (taxes), de vignettes, d'étiquettes de visa, de bandelettes d'arrachage, de papier de cigarette.

27. Procédé de fabrication d'un élément optique selon l'une quelconque des revendications 1 à 22 sur un matériau support, selon lequel l'élément optique est agencé sous la forme d'un revêtement sur un support, de telle sorte qu'il puisse être appliqué sur un substrat en utilisant de la chaleur et/ou de la pression.

28. Procédé de fabrication d'un élément optique selon l'une quelconque des revendications précédentes, selon lequel les particules (20) sont appliquées sous la forme d'une suspension ou dispersion aqueuse sur un substrat, de telle sorte les forces de cisaillement qui se produisent pendant le procédé d'application conduisent à une orientation préférée des particules (20), et cette orientation préférée est stabilisée dans l'élément optique lors d'un procédé de séchage et/ou d'un procédé de réticulation et/ou d'un procédé de polymérisation ultérieur de la matrice (21).

29. Procédé selon l'une quelconque des revendications précédentes, **caractérisé en ce que** le procédé d'application consiste en un procédé d'enduction, de manière particulièrement préférée utilisant une racle (43), une racle à sens de rotation contraire (44), un barreau (40), une lame (42), une buse à fente (50), une rouleau de transfert, un laminoir à trois cylindres ou une barre (41), éventuellement en combinaison avec un soutien électrostatique et/ou magnétique (70).

30. Procédé selon l'une quelconque des revendications précédentes, **caractérisé en ce que** le procédé d'application consiste en un encollage ou en procédé d'impression, tel que p. ex. la tampographie ou la sérigraphie.

31. Procédé selon l'une quelconque des revendications précédentes, **caractérisé en ce que** les particules (20) sont fabriquées par hydrolyse de cellulose, les particules étant de manière particulièrement préférée colorées avec des colorants de préférence luminescents avant et/ou pendant et/ou après l'hydrolyse.

32. Procédé selon l'une quelconque des revendications précédentes, **caractérisé en ce que** les particules (20) sont fabriquées par broyage de cellulose de manière particulièrement préférée fibreuse telle que le Lyocell, la cellulose fibreuse et/ou les particules broyées (20) étant colorées avec des colorants de préférence luminescents.

33. Procédé selon l'une quelconque des revendications précédentes, **caractérisé en ce que** l'élément optique est post-traité après sa fabrication, une émission polarisée linéairement ou une absorption polarisée linéairement déjà présente étant annulée en zones par un traitement chimique, ou une émission polarisée linéairement ou une absorption polarisée linéairement latente encore non présente étant activée en zones par un traitement chimique, le traitement chimique pouvant consister de manière particulièrement préférée en des modifications du pH ou des modifications du potentiel redox, une complexation avec des métaux ou un traitement photochimique.
